(19) Europäisches Patentamt
European Patent Office
Office européen des brevets

(11) EP 2 371 877 B1

(12) **EUROPEAN PATENT SPECIFICATION**

(45) Date of publication and mention of the grant of the patent:
**29.04.2026 Bulletin 2026/18**

(21) Application number: **09829172.7**

(22) Date of filing: **27.11.2009**

(51) International Patent Classification (IPC):
***C08G 64/00*** (2006.01) ***C08J 5/18*** (2006.01)
***C08K 3/00*** (2018.01) ***C08K 5/00*** (2006.01)
***C08L 69/00*** (2006.01) ***G02B 1/04*** (2006.01)
***G02B 5/30*** (2006.01)

(52) Cooperative Patent Classification (CPC):
(C-Sets available)
**G02B 1/041; B29B 7/726; B29B 7/88; B29B 7/90; B29B 9/14; C08G 64/0208; C08G 64/0216; C08G 64/0291; C08G 64/305; C08J 5/18; C08K 3/013; C08L 69/00;** B29B 7/48; B29B 9/06; C08J 2369/00; (Cont.)

(86) International application number:
**PCT/JP2009/070058**

(87) International publication number:
**WO 2010/061927 (03.06.2010 Gazette 2010/22)**

(54) **POLYCARBONATE RESIN, POLYCARBONATE RESIN COMPOSITION, OPTICAL FILM, AND POLYCARBONATE RESIN MOLDED ARTICLE**

POLYCARBONATHARZ, POLYCARBONATHARZZUSAMMENSETZUNG, OPTISCHE FOLIE UND POLYCARBONATHARZFORMKÖRPER

RÉSINE DE POLYCARBONATE, COMPOSITION DE RÉSINE DE POLYCARBONATE, FILM OPTIQUE ET ARTICLE MOULÉ DE RÉSINE DE POLYCARBONATE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:
**28.11.2008 JP 2008305668**
**28.11.2008 JP 2008305680**
**03.03.2009 JP 2009048931**
**17.06.2009 JP 2009143952**
**17.06.2009 JP 2009144781**
**17.06.2009 JP 2009144782**
**17.06.2009 JP 2009144783**
**17.06.2009 JP 2009144784**

(43) Date of publication of application:
**05.10.2011 Bulletin 2011/40**

(60) Divisional application:
**14166464.9 / 2 789 640**

(73) Proprietor: **Mitsubishi Chemical Corporation**
**Tokyo 100-8251 (JP)**

(72) Inventors:
- **ANDOU Masato**
  **Yokkaichi-shi**
  **Mie 510-8530 (JP)**
- **TANAKA Tomohiko**
  **Kitakyushu-shi**
  **Fukuoka 806-0004 (JP)**
- **SASAKI Haruo**
  **Kitakyushu-shi**
  **Fukuoka 806-0004 (JP)**
- **YOKOGI Masashi**
  **Kitakyushu-shi**
  **Fukuoka 806-0004 (JP)**

(74) Representative: **Vossius & Partner**
**Patentanwälte Rechtsanwälte mbB**
**Siebertstrasse 3**
**81675 München (DE)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(56) References cited:
**EP-A1- 1 640 400**
**EP-A1- 2 033 981**
**WO-A1-2004/111106**
**WO-A1-2007/148604**

(52) Cooperative Patent Classification (CPC): (Cont.)
C08K 5/09; C08K 5/49; C08L 91/06

C-Sets
**C08L 69/00, C08L 91/06;**
**G02B 1/041, C08L 69/00**

## Description

### Technical Field

The present invention relates to polycarbonate resins and the like. More particularly, the invention relates to polycarbonate resins having a specific end group, and the like.

### Background Art

With respect to polycarbonate resins produced using a starting material obtained from biomass resources, patent document 1, for example, describes that isosorbide is used as a plant-derived monomer and subjected to transesterification with diphenyl carbonate to thereby obtain a polycarbonate resin. Patent document 2 describes a polycarbonate resin obtained by copolymerizing isosorbide with bisphenol A. Patent document 3 describes that the rigidity of polycarbonate resins is mitigated by copolymerizing isosorbide with an aliphatic diol.
Patent Document 4 relates to a specific polycarbonate containing an ether diol residue producible from a polysaccharide. Patent Document 5 refers to a polycarbonate copolymer containing a plant-derived raw material.

### Prior-Art Documents

### Patent Documents

| | |
|---|---|
| Patent Document 1: | British Patent No. 1,079,686, description |
| Patent Document 2: | JP-A-56-055425 |
| Patent Document 3: | International Publication No. 2004/111106 |
| Patent Document 4: | EP 1 640 400 A1 |
| Patent Document 5: | WO 2007/148604 A1 |

### Summary of the Invention

### Problems that the Invention is to Solve

Incidentally, polycarbonate resins obtained using plant-derived monomers such as isosorbide are insufficient in heat resistance and transparency as compared with conventional aromatic polycarbonates derived from petroleum-derived starting materials. There also is a problem that the former polycarbonate resins yellow during melt molding, making it difficult to use the resins as transparent members or optical members.
An object of the invention is to provide polycarbonate resins containing a specific end group and having excellent heat resistance and transparency, and compositions which contain the polycarbonate resins.

### Means for Solving the Problems

The present invention is as defined in the claims.

### Effects of the Invention

According to the invention, polycarbonate resins having excellent heat resistance and transparency and polycarbonate resin compositions containing the polycarbonate resins are obtained.

### Brief Description of the Drawing

[Fig. 1] Fig. 1 shows a $^{1}$H-NMR chart of heterocycle-containing polycarbonate resin A-1.

### Modes for Carrying Out the Invention

Embodiments of the invention will be explained below in detail. The invention should not be construed as being limited to the following embodiments, and can be variously modified within the spirit of the invention.
The expression ppm as used in the invention means the proportion by weight of the contained substance to the

reference substance, unless there is any particular designation.

[1] Polycarbonate Resins

The polycarbonate resins to be used in the invention are polycarbonate resins obtained by the polycondensation of a dihydroxy compound having a linking structure of the following structural formula (1) with a carbonic diester, within the limitations of claim 1.

[Chem. 33]

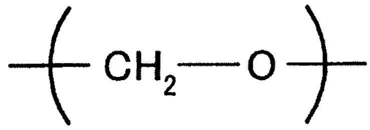

(1)

(No hydrogen atom is bonded to the oxygen atom contained in structural formula (1).)

(Dihydroxy Compound)

Examples of the dihydroxy compound having a linking structure of structural formula (1) include compounds having an aromatic group in a side chain and having in the main chain an ether group bonded to an aromatic group, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene, oxyalkylene glycols such as diethylene glycol, triethylene glycol, and tetraethylene glycol, bis(hydroxyalkoxyaryl)alkanes such as bis[4-(2-hydroxyethoxy)phenyl]methane, bis[4-(2-hydroxyethoxy)phenyl]diphenylmethane, 1,1-bis[4-(2-hydroxyethoxy)phenyl]ethane, 1,1-bis[4-(2-hydroxyethoxy)phenyl]-1-phenylethane, 2,2-bis[4-(2-hydroxyethoxy)phenyl]propane, 2,2-bis[4-(2-hydroxyethoxy)-3-methylphenyl]propane, 2,2-bis[3,5-dimethyl-4-(2-hydroxyethoxy)phenyl]propane, 1,1-bis[4-(2-hydroxyethoxy)phenyl]-3,3,5-trimethylcyclohexane, 1,1-bis[4-(2-hydroxyethoxy)phenyl]cyclohexane, 1,4-bis[4-(2-hydroxyethoxy)phenyl]cyclohexane, 1,3-bis[4-(2-hydroxyethoxy)phenyl]cyclohexane, 2,2-bis[4-(2-hydroxyethoxy)-3-phenylphenyl]propane, 2,2-bis[(2-hydroxyethoxy)-3-isopropylphenyl]propane, 2,2-bis[3-tert-butyl-4-(2-hydroxyethoxy)phenyl]propane, 2,2-bis[4-(2-hydroxyethoxy)phenyl]butane, 2,2-bis[4-(2-hydroxyethoxy)phenyl]-4-methylpentane, 2,2-bis[4-(2-hydroxyethoxy)phenyl]octane, 1,1-bis[4-(2-hydroxyethoxy)phenyl]decane, 2,2-bis[3-bromo-4-(2-hydroxyethoxy)phenyl]propane, and 2,2-bis[3-cyclohexyl-4-(2-hydroxyethoxy)phenyl]propane, bis(hydroxyalkoxyaryl) cycloalkanes such as 1,1-bis[4-(2-hydroxyethoxy)phenyl]cyclohexane, 1,1-bis[3-cyclohexyl-4-(2-hydroxyethoxy)phenyl]cyclohexane, and 1,1-bis[4-(2-hydroxyethoxy)phenyl]cyclopentane, dihydroxyalkoxydiaryl ethers such as 4,4'-bis(2-hydroxyethoxy)diphenyl ether and 4,4'-bis(2-hydroxyethoxy)-3,3'-dimethyldiphenyl ether, bishydroxyalkoxyaryl sulfides such as 4,4'-bis(2-hydroxyethoxyphenyl) sulfide and 4,4'-bis[4-(2-dihydroxyethoxy)-3-methylphenyl] sulfide, bishydroxyalkoxyaryl sulfoxides such as 4,4'-bis(2-hydroxyethoxyphenyl) sulfoxide and 4,4'-bis[4-(2-dihydroxyethoxy)-3-methylphenyl] sulfoxide, bishydroxyalkoxyaryl sulfones such as 4,4'-bis(2-hydroxyethoxyphenyl) sulfone and 4,4'-bis[4-(2-dihydroxyethoxy)-3-methylphenyl] sulfone, 1,4-bishydroxyethoxybenzene, 1,3-bishydroxyethoxybenzene, 1,2-bishydroxyethoxybenzene, 1,3-bis[2-[4-(2-hydroxyethoxy)phenyl]propyl]benzene, 1,4-bis[2-[4-(2-hydroxyethoxy)phenyl]propyl]benzene, 4,4'-bis(2-hydroxyethoxy)biphenyl, 1,3-bis[4-(2-hydroxyethoxy)phenyl]-5,7-dimethyladamantane, dihydroxy compounds having a heterocyclic group which are represented by dihydroxy compounds represented by the following general formula (4), 2-(5-ethyl-5-hydroxymethyl-1,3-dioxan-2-yl)-2-methylpropan-1-ol, and spiro-glycols such as 3,9-bis(2-hydroxy-1,1-dimethylethyl)-2,4,8,10-tetraoxaspiro[5,5]undecane. These compounds may be used either alone or in combination of two or more thereof.

Preferred of these are the dihydroxy compounds represented by the following general formula (4).

[Chem. 34]

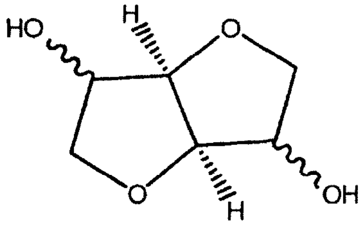

(4)

Examples of the dihydroxy compounds represented by general formula (4) include isosorbide, isomannide, and isoidide, which are stereoisomers. These compounds may be used either alone or in combination of two or more thereof. Most preferred of these dihydroxy compounds is isosorbide from the standpoints of availability, ease of production, optical properties, and moldability. Isosorbide is obtained by the dehydrating condensation of sorbitol, which is produced from various starches that are abundant resources and are easily available.

Isosorbide is apt to be gradually oxidized by oxygen. It is therefore important to prevent inclusion of moisture and to use a free-oxygen absorber or a nitrogen atmosphere in order to prevent decomposition caused by oxygen, when isosorbide is stored or is handled during production. Oxidation of isosorbide generates decomposition products including formic acid. In the case where isosorbide containing these decomposition products, for example, is used to produce a polycarbonate resin, these decomposition products cause coloration of the polycarbonate resin obtained or considerable deterioration of the properties thereof. There are even the cases where the decomposition products affect the polymerization reaction, making it impossible to obtain a high-molecular polymer. Use of such isosorbide is hence undesirable. In the case where stabilizers serving to prevent the generation of formic acid have been added, some kinds of stabilizers cause coloration of the polycarbonate resin obtained or considerably impair the properties thereof. As the stabilizers, use is made of reducing agents and antacids. Examples of the reducing agents include sodium borohydride and lithium borohydride, and examples of the antacids include alkali metal salts such as sodium hydroxide. Such an alkali metal functions also as a polymerization catalyst. It is therefore undesirable to excessively add such an alkali metal salt because the excessive addition makes it impossible to control the polymerization reaction. In this description, the terms "alkali metal" and "alkaline earth metal" are used so as to have the same meanings respectively as "Group-1 metal" and "Group-2 metal" according to the long form of the periodic table (Nomenclature of Inorganic Chemistry IUPAC Recommendations 2005).

Isosorbide may be distilled according to need in order to obtain isosorbide containing no products of oxidative decomposition. Also in the case where stabilizers have been incorporated in order to prevent the isosorbide from being oxidized or decomposed, this isosorbide may be distilled according to need. In this case, the distillation of the isosorbide may be simple distillation or continuous distillation, and is not particularly limited. The distillation is conducted at a reduced pressure in an inert gas atmosphere, e.g., argon or nitrogen. By conducting such distillation of isosorbide, high-purity isosorbide having a formic acid content of 20 ppm or less, in particular, 5 ppm or less, can be obtained.

The formic acid content of isosorbide may be determined using an ion chromatograph in the following manner.

About 0.5 g of isosorbide is precisely weighed out and placed in a 50-mL measuring flask, and pure water is added thereto to adjust the volume of the resultant solution. An aqueous solution of sodium formate is used as a reference. The peak having the same retention time as the peak of the reference is regarded as assignable to formic acid, and the amount of formic acid is determined from the area of the peak by the absolute calibration curve method.

The ion chromatograph used was Type DX-500, manufactured by Dionex Corp., and a conductometric detector was used as a detector. As measuring columns, use is made of AG-15 and AS-15, both manufactured by Dionex Corp., as a guard column and a separation column, respectively. A test sample is injected into a 100-μL sample loop, and 10-mM NaOH is used as an eluent to examine the sample at a flow rate of 1.2 mL/min and a thermostatic-chamber temperature of 35°C. As a suppressor is used a membrane suppressor. As a regenerant solution is used a 12.5-mM aqueous solution of $H_2SO_4$.

(Alicyclic Dihydroxy Compound)

It is preferred that the polycarbonate resins to be used in the invention should contain constituent units derived from an alicyclic dihydroxy compound, besides constituent units derived from the dihydroxy compound represented by general formula (4) described above.

The alicyclic dihydroxy compound is not particularly limited, and examples thereof usually include compounds including a 5-membered ring structure or 6-membered ring structure. By using an alicyclic dihydroxy compound having a 5-membered ring or 6-membered ring structure, higher heat resistance can be imparted to the polycarbonate resin to be obtained. The 6-membered ring structure may have a fixed chair or boat form constituted of covalent bonds.

The number of carbon atoms contained in the alicyclic dihydroxy compound is generally 70 or less, preferably 50 or less, more preferably 30 or less. Alicyclic dihydroxy compounds having too large a number of carbon atoms tend to be difficult to synthesize or difficult to purify and have a high cost, although high in heat resistance. The smaller the number of carbon atoms, the more the purification and procurement of the alicyclic dihydroxy compound tend to be easy.

Examples of the alicyclic dihydroxy compound including a 5-membered ring structure or 6-membered ring structure include alicyclic dihydroxy compounds represented by the following general formula (II) or (III).

$HOCH_2\text{-}R^1\text{-}CH_2OH$ (II)

$HO\text{-}R^2\text{-}OH$ (III)

(In formula (II) and formula (III), $R^1$ and $R^2$ represent a cycloalkylene group having 4-20 carbon atoms.)

Cyclohexanedimethanol, which is an alicyclic dihydroxy compound represented by general formula (II), includes various isomers represented by general formula (II) in which $R^1$ is represented by the following general formula (IIa) (wherein $R^3$ represents an alkyl group having 1-12 carbon atoms). Specific examples thereof include 1,2-cyclohexanedimethanol, 1,3-cyclohexanedimethanol, and 1,4-cyclohexanedimethanol.

[Chem. 35]

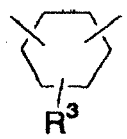

(IIa)

Tricyclodecanedimethanol and pentacyclopentadecanedimethanol, which are alicyclic dihydroxy compounds represented by general formula (II), include various isomers represented by general formula (II) in which $R^1$ is represented by the following general formula (IIb) (wherein n represents 0 or 1).

[Chem. 36]

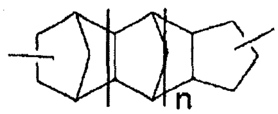

(IIb)

Decalindimethanol or tricyclotetradecanedimethanol, which is an alicyclic dihydroxy compound represented by general formula (II), includes various isomers represented by general formula (II) in which $R^1$ is represented by the following general formula (IIc) (wherein m represents 0 or 1). Specific examples thereof include 2,6-decalindimethanol, 1,5-decalindimethanol, and 2,3-decalindimethanol.

[Chem. 37]

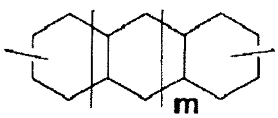

(IIc)

Norbornanedimethanol, which is an alicyclic dihydroxy compound represented by general formula (II), includes various isomers represented by general formula (II) wherein $R^1$ is represented by the following general formula (IId). Specific examples thereof include 2,3-norbomanedimethanol and 2,5-norbornanedimethanol.

[Chem. 38]

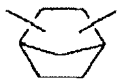

(IId)

Adamantanedimethanol, which is an alicyclic dihydroxy compound represented by general formula (II), includes various isomers represented by general formula (II) in which $R^1$ is represented by the following general formula (IIe). Specific examples thereof include 1,3-adamantanedimethanol.

[Chem. 39]

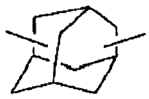

(IIe)

Meanwhile, cyclohexanediol, which is an alicyclic dihydroxy compound represented by general formula (III), includes various isomers represented by general formula (III) in which $R^2$ is represented by the following general formula (IIIa) (wherein $R^3$ represents an alkyl group having 1-12 carbon atoms). Specific examples thereof include 1,2-cyclohexanediol, 1,3-cyclohexanediol, 1,4-cyclohexanediol, and 2-methyl-1,4-cyclohexanediol.

[Chem. 40]

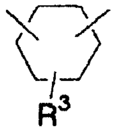

(IIIa)

Tricyclodecanediol and pentacyclopentadecanediol, which are alicyclic dihydroxy compounds represented by general formula (III), include various isomers represented by general formula (III) in which $R^2$ is represented by the following general formula (IIIb) (wherein n represents 0 or 1).

[Chem. 41]

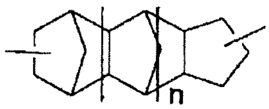

(IIIb)

Decalindiol or tricyclotetradecanediol, which is an alicyclic dihydroxy compound represented by general formula (III), includes various isomers represented by general formula (III) in which $R^2$ is represented by the following general formula (IIIc) (wherein m represents 0 or 1). Specifically, 2,6-decalindiol, 1,5-decalindiol, 2,3-decalindiol, or the like is used as such compound.

[Chem. 42]

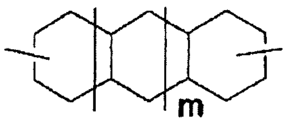

(IIIc)

Norbomanediol, which is an alicyclic dihydroxy compound represented by general formula (III), includes various isomers represented by general formula (III) in which $R^2$ is represented by the following general formula (IIId). Specifically, 2,3-norbornanediol, 2,5-norbornanediol, or the like is used as such compound.

[Chem. 43]

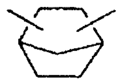

(IIId)

Adamantanediol, which is an alicyclic dihydroxy compound represented by general formula (III), includes various isomers represented by general formula (III) in which $R^2$ is represented by the following general formula (IIIe). Specifically, 1,3-adamantanediol or the like is used as such compound.

[Chem. 44]

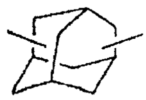

(IIIe)

Especially preferred of the examples of alicyclic dihydroxy compounds described above are cyclohexanedimethanols, tricyclodecanedimethanols, adamantanediols, and pentacyclopentadecanedimethanols. Preferred from the standpoints of availability and handleability are 1,4-cyclohexanedimethanaol, 1,3-cyclohexanedimethanol, 1,2-cyclohexanedimethanol, and tricyclodecanedimethanol.

The compounds shown above are mere examples of the alicyclic dihydroxy compounds usable in the invention, and the alicyclic dihydroxy compounds usable in the invention should not be construed as being limited to those examples in any way. One of those alicyclic diol compounds may be used alone, or a mixture of two or more thereof may be used.

In the polycarbonate resins to be used in the invention, the ratio of the content of constituent units derived from the dihydroxy compound represented by general formula (4) described above to the content of constituent units derived from an alicyclic dihydroxy compound is not particularly limited, and can be any value selected at will.

It is preferred that the content ratio should be such that the ratio of (constituent units derived from the dihydroxy compound represented by general formula (4)):(constituent units derived from the alicyclic dihydroxy compound) is generally from (1:99) to (99:1) (% by mole), and that the ratio of (constituent units derived from the dihydroxy compound represented by general formula (4)):(constituent units derived from the alicyclic dihydroxy compound) is especially from (10:90) to (90:10) (% by mole).

In the case where the amount of constituent units derived from the dihydroxy compound represented by general formula (4) is excessively larger than that range and where the amount of constituent units derived from the alicyclic dihydroxy compound is excessively smaller than that range, the polycarbonate resin is apt to be colored. Conversely, in the case where the amount of constituent units derived from the dihydroxy compound represented by general formula (4) is too small and where the amount of constituent units derived from the alicyclic dihydroxy compound is too large, the polycarbonate resin tends to have an insufficient molecular weight.

(Other Dihydroxy Compounds)

The polycarbonate resins to be used in the invention may contain constituent units derived from dihydroxy compounds other than the dihydroxy compound represented by general formula (4) and than the alicyclic dihydroxy compound described above.

Examples of such other dihydroxy compounds include aliphatic dihydroxy compounds, oxyalkylene glycols, bisphenols, and diols having a cyclic acetal structure.

Examples of the aliphatic dihydroxy compounds include ethylene glycol, 1,3-propanediol, 1,2-propanediol, 1,4-butanediol, 1,3-butanediol, 1,2-butanediol, 1,5-heptanediol, and 1,6-hexanediol.

Examples of the bisphenols include 2,2-bis(4-hydroxyphenyl)propane [= bisphenol A], 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, and 1,1-bis(4-hydroxyphenyl)cyclohexane.

Examples of the bisphenols further include bis(4-hydroxyphenyl) sulfone, 2,4'-dihydroxydiphenyl sulfone, bis(4-hydroxyphenyl) sulfide, 4,4'-dihydroxydiphenyl ether, 4,4'-dihydroxy-3,3'-dichlorodiphenyl ether, 4,4'-dihydroxy-2,5-diethoxydiphenyl ether, 9,9-bis(4-(2-hydroxyethoxy)phenyl)fluorene, 9,9-bis(4-(2-hydroxyethoxy-2-methyl)phenyl)fluorene, 9,9-bis(4-hydroxyphenyl)fluorene, and 9,9-bis(4-hydroxy-2-methylphenyl)fluorene.

Examples of the diols having a cyclic acetal structure include spiro-glycols and dioxane glycol.

One or more of such other dihydroxy compounds can be used.

Use of such other dihydroxy compounds can produce the effect of improving flexibility, improving heat resistance, or improving moldability, etc. However, too high contents of constituent units derived from the other dihydroxy compounds may result in a decrease in the inherent optical properties.

Consequently, it is preferred that in each of the polycarbonate resins to be used in the invention, the proportion of the sum of the dihydroxy compound represented by general formula (4) and the alicyclic dihydroxy compound to all dihydroxy compounds constituting the polycarbonate resin should be 90% by mole or higher.

It is especially preferred that the polycarbonate resins to be used in the invention each should be constituted using the dihydroxy compound represented by general formula (4) and the alicyclic dihydroxy compound as the only dihydroxy compounds.

(Carbonic Diester)

Examples of the carbonic diester to be condensation-polymerized with the dihydroxy compound having a linking structure of structural formula (1) described above generally include carbonic diesters represented by the following general formula (3). One of these carbonic diesters may be used alone, or a mixture of two or more thereof may be used.

[Chem. 45]

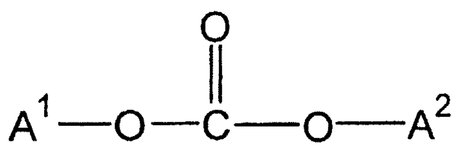

(3)

In general formula (3), $A^1$ and $A^2$ each are a monovalent aliphatic group which has 1-18 carbon atoms and may have a substituent or a monovalent aromatic group which may have a substituent, and $A^1$ and $A^2$ may be the same or different.

Examples of the carbonic diesters represented by general formula (3) include diphenyl carbonate, substituted diphenyl carbonates such as ditolyl carbonate, dimethyl carbonate, diethyl carbonate, and di-t-butyl carbonate.

Preferred of these are diphenyl carbonate and substituted diphenyl carbonates. Especially preferred is diphenyl carbonate.

(End Group Structures of the Polycarbonate Resins)

As described above, the polycarbonate resins to be used in the invention are obtained as polycarbonate resins containing one or more end groups each represented by the following structural formula (2) (hereinafter sometimes referred to as "double-bond ends"), by the polycondensation of the dihydroxy compound having a linking structure of structural formula (1) with a carbonic diester.

[Chem. 46]

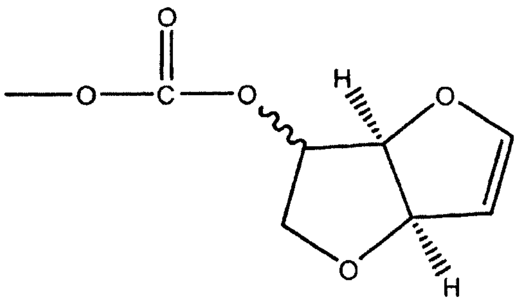

(2)

In the polycarbonate resins to be used in the invention, the proportion of the number of end groups each represented by structural formula (2) (A) to the number of all end groups (B), A/B, is in the range of 0.001% to 7%. The proportion (A/B) is preferably in the range of 0.001% to 6%, more preferably in the range of 0.001% to 5%.

In the case where the proportion of the number of end groups represented by structural formula (2) (A) to the number of all end groups (B), A/B, is too high, the polycarbonate resin tends to have an impaired hue.

Methods for regulating the proportion of the number of end groups represented by structural formula (2) (A) to the number of all end groups (B), A/B, to a value within that range are not particularly limited. However, examples thereof generally include: a method in which the ratio of the amount of the carbonic diester to all dihydroxy compounds to be subjected to the reaction is regulated within a range capable of yielding a desired high-molecular product; and a method in which the period over which the reaction mixture or the resin undergoes an unnecessarily excessive thermal history during the polymerization reaction or molding, for example, the reaction mixture or the resin is held at a high temperature of 280°C or higher, is regulated.

In the polycarbonate resin of the present invention, the proportion of the number of end groups each represented the following structural formula (5) (hereinafter sometimes referred to as "phenyl-group ends") (C) to the number of all end groups (B), C/B, is 25% or higher. In the case where the proportion of the number of phenyl-group ends (C) to the number of all end groups (B), C/B, is too low, there is a possibility that discoloration might be enhanced under high-temperature conditions involving a heightened polymerization reaction temperature, a heightened injection molding temperature, or the like.

[Chem. 47]

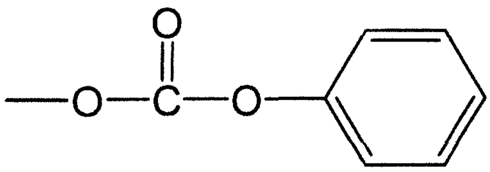

(5)

Methods for regulating the proportion of phenyl-group ends in the polycarbonate resin to a value within that range are not particularly limited. For example, the ratio of the amount of the carbonic diester to all dihydroxy compounds to be subjected to the reaction is regulated within a range capable of yielding a desired high-molecular product, or residual monomers are removed from the reaction system by degassing in a later stage in the polymerization reaction. Alternatively, the rate of reaction is increased, for example, by heightening the stirring efficiency of the reactor in a later stage in the polymerization reaction. Thus, the proportion of the number of phenyl-group ends (C) to the number of all end groups (B), C/B, can be regulated to a value within that range.

Incidentally, the structures and proportions of end groups of a polycarbonate resin can be calculated through an examination for 1H-NMR spectrum made with an NMR spectrometer using, as a measuring solvent, heavy chloroform to which TMS has been added.

The degree of polymerization of each of the polycarbonate resins to be used in the invention is preferably 0.40 dL/g or higher, in particular, 0.40 dL/g to 2.0 dL/g, in terms of reduced viscosity determined by precisely regulating a polycarbonate resin concentration to 1.00 g/dL using a mixture solution composed of phenol and 1,1,2,2-tetrachloroethane in a weight ratio of 1:1 as a solvent and measuring the viscosity thereof at a temperature of 30.0°C±0.1°C (hereinafter referred to simply as "reduced viscosity of polycarbonate resin"). The reduced viscosity of the polycarbonate resin is more preferably in the range of 0.45 dL/g to 1.5 dL/g.

Polycarbonate resins having too low a reduced viscosity tend to give molded articles, e.g., lenses, that have reduced mechanical strength. On the other hand, polycarbonate resins having too high a reduced viscosity have reduced flowability during molding, resulting in reduced cycle characteristics, and tend to give molded articles having increased

birefringence.

The polycarbonate resins to be used in the invention have an Abbe number of preferably 50 or larger, especially preferably 55 or larger. The larger the value thereof, the smaller the wavelength-dependent dispersion of refractive indexes. For example, when the polycarbonate resins are used as single lenses, the chromatic aberration thereof decreases with increasing Abbe number, making it easy to obtain clearer images. The smaller the Abbe number, the larger the wavelength-dependent dispersion of refractive indexes. When the polycarbonate resins are used as single lenses, the chromatic aberration thereof increases with decreasing Abbe number, resulting in enhanced image blurring.

The polycarbonate resins to be used in the invention have a 5% weight loss temperature of preferably 340°C or higher, especially preferably 345°C or higher. The higher the 5% weight loss temperature, the higher the thermal stability and the higher the temperatures at which the polycarbonate resins can be used. Furthermore, such polycarbonate resins can be produced at an elevated temperature, and the allowance of control for production can be widened. Such polycarbonate resins therefore are easy to produce.

The lower the 5% weight loss temperature, the lower the thermal stability and the less the polycarbonate resins are usable at high temperatures. In addition, the allowance of control for production becomes narrow, making the production difficult.

The polycarbonate resins to be used in the invention have a photoelastic coefficient of preferably $40\times10^{-12}$ $Pa^{-1}$ or less, more preferably $20\times10^{-12}$ $Pa^{-1}$ or less. In the case where a polycarbonate resin has a high value of photoelastic coefficient, films formed therefrom by melt extrusion, solution casting, or the like have an increased value of phase retardation. When these films are stretched, slight changes in tension result in further increased fluctuations in the in-plane phase retardation of the films. Furthermore, when such a retardation film is applied, not only a shifting from the desired phase retardation occurs due to tension for the application, but also the value of phase retardation is apt to change due to the contraction, etc. of the polarizing plate obtained by the application. The lower the photoelastic coefficient, the smaller the fluctuations in phase retardation.

The polycarbonate resins to be used in the invention have an Izod impact strength of preferably 30 $J/m^2$ or higher. The higher the Izod impact strength, the higher the strength of the molded article and the less the molded article is apt to break.

It is preferred that the polycarbonate resins to be used in the invention each should be a polycarbonate resin in which the amount of any gasses, other than phenol ingredients, that generate per unit area from the resin at 110°C (hereinafter sometimes referred to simply as "gas generation amount") is 5 $ng/cm^2$ or less. It is more preferred that the gas generation amount regarding gases derived from the dihydroxy compounds other than the dihydroxy compound represented by general formula (4) should be 0.5 $ng/cm^2$ or less. The smaller the gas generation amount, the more the polycarbonate resin is usable in applications where influences of generated gases should be avoided, such as, for example, applications in which electronic parts, e.g., semiconductors, are stored, applications concerning interior materials for buildings, and the housings of domestic electrical products, etc.

Specific methods for determining the Abbe number, 5% weight loss temperature, photoelastic coefficient, Izod impact strength, and gas generation amount of each of the polycarbonate resins to be used in the invention are as shown in the section Examples which will be described later.

When examined with a differential scanning calorimeter (DSC), the polycarbonate resins to be used in the invention each shows a single glass transition temperature. By regulating the kinds and proportions of the dihydroxy compound represented by general formula (4) and the alicyclic dihydroxy compound, the polycarbonate resins to be used in the invention each can be obtained as a polymer having any desired glass transition temperature in the range of about 45°C to about 155°C according to applications.

For example, for film applications where flexibility is necessary, it is preferred to regulate the glass transition temperature of the polycarbonate resin to 45°C or higher, e.g., 45°C-100°C.

In particular, for molded-article applications where heat resistance is required, such as bottles and packages, it is preferred to regulate the glass transition temperature of the polycarbonate resin to 90°C or higher, e.g., 90°C-130°C.

When the polycarbonate resin has a glass transition temperature of 120°C or higher, this polycarbonate resin is suitable for application to lenses as optical parts. Namely, by using the polycarbonate resin having such a glass transition temperature, it is possible to obtain a lens which is less apt to deform even in a high-temperature high-humidity environment having a temperature of 85°C and a relative humidity of 85% and which is reduced in fluctuations of surface accuracy.

(Process for Producing the Polycarbonate Resins)

The polycarbonate resins to be used in the invention can be produced by conventionally known polymerization methods. A preferred polymerization method is a melt polymerization method in which the dihydroxy compound having a linking structure of structural formula (1) described above and one or more other dihydroxy compounds which are used according to need are reacted with a carbonic diester in the presence of a polymerization catalyst.

In the melt polymerization method, the carbonic diester is used in such an amount that the molar proportion thereof to all dihydroxy compounds to be subjected to the reaction, including the dihydroxy compound having a linking structure of structural formula (1), is preferably from 0.90 to 1.10. The molar proportion thereof is more preferably from 0.96 to 1.04.

In the case where the molar proportion of the carbonic diester used in the melt polymerization method is too low, the polycarbonate resin produced has an increased amount of terminal OH groups. This polymer tends to have impaired thermal stability. There also is a tendency that a desired high-molecular product is not obtained. On the other hand, in the case where the molar proportion of the carbonic diester used is too high, the rate of the transesterification reaction tends to decrease when the polymerization is conducted under the same conditions, making it difficult to produce a polycarbonate resin having a desired molecular weight. In addition, the polycarbonate resin thus produced tends to contain a larger amount of the carbonic diester remaining therein, and the residual carbonic diester tends to cause an odor during molding or render the molded article odorous.

From such standpoints, the polycarbonate resins to be used in the invention are ones in which the content of the residual dihydroxy compound having a linking structure of structural formula (1) is preferably 60 ppm or less, more preferably 50 ppm or less, especially preferably 30 ppm or less.

In the case where a polycarbonate resin has too high a content of the residual dihydroxy compound having a linking structure of structural formula (1), not only this polymer has impaired thermal stability but also there is a possibility that the polymer might leave an increased amount of mold deposits when injection-molded or might leave an increased amount of roll deposits when extrusion-molded into sheet or film, resulting in an impaired surface appearance.

Furthermore, the polycarbonate resins to be used in the invention are ones in which the content of the carbonic diester is preferably 60 ppm or less, more preferably 0.1 ppm to 60 ppm, even more preferably 0.1 ppm to 50 ppm, especially preferably 0.1 ppm to 30 ppm.

In the case where a polycarbonate resin has too high a content of the carbonic diester represented by general formula (3), this polymer has impaired thermal stability and tends to leave an increased amount of mold deposits when injection-molded or leave an increased amount of roll deposits when extrusion-molded into sheet or film, resulting in an impaired surface appearance, etc.

The proportions of the dihydroxy compound having a linking structure of structural formula (1), the alicyclic dihydroxy compound, and other dihydroxy compounds which may be used according to need are suitably regulated according to the proportions of constituent units derived from the respective dihydroxy compounds constituting each polycarbonate resin to be used in the invention.

(Polymerization Catalyst)

As the polymerization catalyst (transesterification catalyst) in the melt polymerization, use may be made of an alkali metal compound and/or an alkaline earth metal compound. It is possible to use a basic compound, such as, e.g., a basic boron compound, basic phosphorus compound, basic ammonium compound, or amine compound, as an auxiliary ingredient together with the alkali metal compound and/or alkaline earth metal compound. It is, however, especially preferred that an alkali metal compound and/or an alkaline earth metal compound should be used alone.

Examples of the alkali metal compound usable as the polymerization catalyst include sodium hydroxide, potassium hydroxide, lithium hydroxide, cesium hydroxide, sodium hydrogen carbonate, potassium hydrogen carbonate, lithium hydrogen carbonate, cesium hydrogen carbonate, sodium carbonate, potassium carbonate, lithium carbonate, cesium carbonate, sodium acetate, potassium acetate, lithium acetate, cesium acetate, sodium stearate, potassium stearate, lithium stearate, cesium stearate, sodium borohydride, potassium borohydride, lithium borohydride, cesium borohydride, phenylated sodium boride, phenylated potassium boride, phenylated lithium boride, phenylated cesium boride, sodium benzoate, potassium benzoate, lithium benzoate, cesium benzoate, disodium hydrogen phosphate, dipotassium hydrogen phosphate, dilithium hydrogen phosphate, dicesium hydrogen phosphate, disodium phenylphosphate, dipotassium phenylphosphate, dilithium phenylphosphate, dicesium phenylphosphate, alcoholates or phenolates of sodium, potassium, lithium, and cesium, and the disodium salt, dipotassium salt, dilithium salt, and dicesium salt of bisphenol A.

Examples of the alkaline earth metal compound include calcium hydroxide, barium hydroxide, magnesium hydroxide, strontium hydroxide, calcium hydrogen carbonate, barium hydrogen carbonate, magnesium hydrogen carbonate, strontium hydrogen carbonate, calcium carbonate, barium carbonate, magnesium carbonate, strontium carbonate, calcium acetate, barium acetate, magnesium acetate, strontium acetate, calcium stearate, barium stearate, magnesium stearate, and strontium stearate. One of these alkali metal compounds and/or alkaline earth metal compounds may be used alone, or two or more thereof may be used in combination.

Examples of the basic boron compound usable in combination with the alkali metal compound and/or alkaline earth metal compound include the sodium salts, potassium salts, lithium salts, calcium salts, barium salts, magnesium salts, or strontium salts of tetramethylboron, tetraethylboron, tetrapropylboron, tetrabutylboron, trimethylethylboron,

trimethylbenzylboron, trimethylphenylboron, triethylmethylboron, triethylbenzylboron, triethylphenylboron, tributylbenzylboron, tributylphenylboron, tetraphenylboron, benzyltriphenylboron, methyltriphenylboron, and butyltriphenylboron.

Examples of the basic phosphorus compound include triethylphosphine, tri-n-propylphosphine, triisopropylphosphine, tri-n-butylphosphine, triphenylphosphine, tributylphosphine, and quaternary phosphonium salts.

Examples of the basic ammonium compound include tetramethylammonium hydroxide, tetraethylammonium hydroxide, tetrapropylammonium hydroxide, tetrabutylammonium hydroxide, trimethylethylammonium hydroxide, trimethylbenzylammonium hydroxide, trimethylphenylammonium hydroxide, triethylmethylammonium hydroxide, triethylbenzylammonium hydroxide, triethylphenylammonium hydroxide, tributylbenzylammonium hydroxide, tributylphenylammonium hydroxide, tetraphenylammonium hydroxide, benzyltriphenylammonium hydroxide, methyltriphenylammonium hydroxide, and butyltriphenylammonium hydroxide.

Examples of the amine compound include 4-aminopyridine, 2-aminopyridine, N,N-dimethyl-4-aminopyridine, 4-diethylaminopyridine, 2-hydroxypyridine, 2-methoxypyridine, 4-methoxypyridine, 2-dimethylaminoimidazole, 2-methoxyimidazole, imidazole, 2-mercaptoimidazole, 2-methylimidazole, and aminoquinoline. With respect to those basic compounds also, one compound may be used alone or two or more compounds may be used in combination.

When an alkali metal compound and/or an alkaline earth metal compound is used, the amount of the polymerization catalyst to be used is in the range of generally 0.1 μmol to 100 μmol, preferably in the range of 0.5 μmol to 50 μmol, more preferably in the range of 1 μmol to 25 μmol, in terms of the amount of the metal(s) per mole of all dihydroxy compounds to be subjected to the reaction. In the case where the polymerization catalyst is used in too small an amount, polymerization activity necessary for producing a polycarbonate resin having a desired molecular weight tends to be not obtained. On the other hand, in the case where the polymerization catalyst is used in too large an amount, the resultant polycarbonate resin tends to have an impaired hue, or by-products tend to generate to reduce flowability or result in enhanced gel generation, making it difficult to produce a polycarbonate resin of target quality.

When a polycarbonate resin to be used in the invention is produced, the dihydroxy compound having a linking structure of structural formula (1) described above may be fed as a solid, or may be heated and fed in a molten state, or may be fed as an aqueous solution.

The alicyclic dihydroxy compound also may be fed as a solid or may be heated and fed in a molten state. When soluble in water, the alicyclic dihydroxy compound may be fed as an aqueous solution. The same applies to the other dihydroxy compounds. The feeding of these starting-material dihydroxy compounds in a molten state or as an aqueous solution has an advantage that metering and conveyance are easy in industrial production.

In the invention, the method in which the dihydroxy compound having a linking structure of structural formula (1), an alicyclic dihydroxy compound, and one or more other dihydroxy compounds which are used according to need are reacted with a carbonic diester in the presence of a polymerization catalyst is usually conducted as a multistage process including two or more stages.

Specifically, the first-stage reaction may be conducted at a temperature of 140-220°C, preferably 150-200°C, for a period of 0.1-10 hours, preferably 0.5-3 hours. In the second and succeeding stages, the reaction temperature is elevated while gradually lowering the pressure of the reaction system from the first-stage pressure. Simultaneously therewith, the aromatic monohydroxy compounds, e.g., phenol, that generate are continuously removed from the reaction system. Finally, polycondensation reaction is conducted at a reaction system pressure of 200 Pa or lower and a temperature in the range of 210-280°C.

For the pressure reduction in the polycondensation reaction, it is important to regulate a balance between temperature and the internal pressure of the reaction system. In particular, when either temperature or pressure is excessively changed earlier than the other, there are the cases where an unreacted monomer is distilled off to change the dihydroxy compound/carbonic acid diester molar ratio, resulting in a reduced degree of polymerization.

For example, in the case where isosorbide and 1,4-cyclohexanedimethanol are used as dihydroxy compounds, the 1,4-cyclohexanedimethanol in the monomeric state is apt to be distilled off when the molar proportion of the 1,4-cyclohexanedimethanol to all dihydroxy compounds is 50% by mole or higher. In this case, the polymerization may be conducted in the following manner. While the internal pressure of the reaction system is kept at a reduced pressure of about 13 kPa, the reactants are reacted while elevating the temperature at a rate of 40 °C/hr or lower. Thereafter, while the pressure is being reduced to about 6.67 kPa, the temperature is elevated at a rate of 40 °C/hr or lower. Finally, polycondensation reaction is conducted at a pressure of 200 Pa or lower and at a temperature of 200-250°C. This method is preferred because a polycarbonate resin having a sufficiently increased degree of polymerization is obtained.

When the molar proportion of 1,4-cyclohexanedimethanol to all dihydroxy compounds is lower than 50% by mole, in particular, when the molar proportion thereof is 30% by mole or lower, an abrupt viscosity increase occurs as compared with the case where the molar proportion of 1,4-cyclohexnedimethanol is 50% by mole or higher. In this case, the following method may, for example, be used. The reactants are reacted while elevating the temperature at a rate of 40 °C/hr or lower until the internal pressure of the reaction system is reduced to about 13 kPa. Thereafter, the reactants are reacted while elevating the temperature at a rate of 40 °C/hr or higher, preferably at a rate of 50 °C/hr or higher, until the pressure is reduced to about 6.67 kPa. Finally, polycondensation reaction is conducted at a reduced pressure of 200 Pa or lower and at

a temperature of 220-290°C. This method is preferred because a polycarbonate resin having a sufficiently increased degree of polymerization is obtained. The type of reaction operation may be any of a batch type, a continuous type, and a combination of batch and continuous types.

(Content of Aromatic Monohydroxy Compounds)

In the polycondensation reaction of dihydroxy compounds with a carbonic diester described above, aromatic monohydroxy compounds which may have an alkyl group having 5 or less carbon atoms generate as by-products. In the present invention,
the content of aromatic monohydroxy compounds which may have an alkyl group having 5 or less carbon atoms in the polycarbonate resin is 700 ppm or less. The content thereof is preferably 500 ppm or less, more preferably 300 ppm or less.

It is, however, noted that the polycarbonate resins to be used in the invention may contain those aromatic monohydroxy compounds which unavoidably remain therein in an amount of about 10 ppm.

The term "aromatic monohydroxy compounds which may have an alkyl group having 5 or less carbon atoms" herein means exclusion of the antioxidant to be added to the polycarbonate resins as will be described later, for example, a hindered phenol.

Examples of the aromatic monohydroxy compounds which may have an alkyl group having 5 or less carbon atoms include phenol, cresol, t-butylphenolphenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, on-pentylphenol, m-n-pentylphenol, p-n-pentylphenol, 2,6-di-t-butylphenol, 2,5-di-t-butylphenol, 2,4-di-t-butylphenol, and 3,5-di-t-butylphenol.

Methods for regulating the content of aromatic monohydroxy compounds which may have an alkyl group having 5 or less carbon atoms in the polycarbonate resins to 700 ppm or less are not particularly limited. However, the following methods are generally possible.

Examples thereof include: to feed the dihydroxy compounds and the carbonic diester in the polycondensation reaction in a proportion close to 1; to cause the polycondensation reaction to proceed further; to effectively discharge the aromatic monohydroxy compounds from the reactor in which the polycondensation reaction is conducted; to degas the high-viscosity liquid reaction mixture in the latter half of the polycondensation reaction while applying a given shear force to the reaction mixture using a horizontal reactor; and to cause the aromatic monohydroxy compounds to form an azeotrope with water by means of a water injection/volatile removal operation.

In the case where a polycarbonate resin to be used in the invention has too high a content of aromatic monohydroxy compounds which may have an alkyl group having 5 or less carbon atoms, this resin tends to have an impaired color tone and impaired transparency and be a material unsuitable for use as, for example, an optical material. Furthermore, this resin tends to have reduced heat resistance and deteriorate in color tone with the lapse of time.

[2] Polycarbonate Resin Compositions

Using any of the polycarbonate resins to be used in the invention, a polycarbonate resin composition can be prepared by incorporating an acidic compound and a phosphorus compound into the resin.

The amounts of the compounding ingredients to be incorporated may be as follows. Per 100 parts by weight of the polycarbonate resin, the amount of at least one acidic compound is from 0.00001 part by weight to 0.1 part by weight, preferably from 0.0001 part by weight to 0.01 part by weight, more preferably from 0.0002 parts by weight to 0.001 part by weight, and the amount of at least one phosphorus compound is from 0.001 part by weight to 1 part by weight, preferably from 0.001 part by weight to 0.1 part by weight, more preferably from 0.001 part by weight to 0.05 parts by weight.

Too small incorporation amounts of the acidic compound may result in the cases where the polycarbonate resin composition cannot be sufficiently inhibited from discoloring when injection-molded under conditions involving a prolonged resin residence time. Too large incorporation amounts of the acidic compound may result in the cases where the resin has considerably reduced hydrolytic resistance.

Too small incorporation amounts of the phosphorus compound may result in the cases where the polycarbonate resin composition cannot be sufficiently inhibited from discoloring when injection-molded under conditions involving a prolonged resin residence time.

(Acidic Compound)

Examples of the acidic compound include BrΦnsted acids and esters thereof, such as hydrochloric acid, nitric acid, boric acid, sulfuric acid, sulfurous acid, phosphoric acid, phosphorous acid, hypophosphorous acid, polyphosphoric acid, adipic acid, ascorbic acid, aspartic acid, azelaic acid, adenosine phosphate, benzoic acid, formic acid, valeric acid, citric acid, glycolic acid, glutamic acid, glutaric acid, cinnamic acid, succinic acid, acetic acid, tartaric acid, oxalic acid, p-toluenesulfinic acid, p-toluenesulfonic acid, naphthalenesulfonic acid, nicotinic acid, picric acid, picolinic acid, phthalic acid, terephthalic acid, propionic acid, benzenesulfinic acid, benzenesulfonic acid, malonic acid, and maleic acid. Preferred of these acidic compounds or derivatives thereof are the sulfonic acids or esters thereof. Especially preferred of these are p-toluenesulfonic acid, methyl p-toluenesulfonate, and butyl p-toluenesulfonate.

These acidic compounds can be added in a step for polycarbonate resin production as compounds for neutralizing the basic transesterification catalyst used in the polycondensation reaction for polycarbonate resin production described above.

(Phosphorus Compound)

Examples of the phosphorus compound include phosphorous acid, phosphoric acid, phosphonous acid, phosphonic acid, and esters of these acids. By adding such a phosphorus compound, the polycarbonate resin can be prevented from discoloring.

Specific examples of the compound include triphenyl phosphite, tris(nonylphenyl) phosphite, tris(2,4-di-tert-butylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, bis(2,6-di-tert-butyl-4-methylphenyl) pentaerythritol diphosphite, 2,2-methylenebis(4,6-di-tert-butylphenyl) octyl phosphite, bis(nonylphenyl) pentaerythritol diphosphite, bis(2,4-di-tert-butylphenyl) pentaerythritol diphosphite, distearyl pentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, tetrakis(2,4-di-tert-butylphenyl) 4,4'-biphenylenediphosphinate, dimethyl benzenephosphonate, diethyl benzenephosphonate, and dipropyl benzenephosphonate.

Preferred of these are trisnonylphenyl phosphite, trimethyl phosphate, tris(2,4-di-tert-butylphenyl) phosphite, bis(2,4-di-tert-butylphenyl) pentaerythritol diphosphite, bis(2,6-di-tert-butyl-4-methylphenyl) pentaerythritol diphosphite, and dimethyl benzenephosphonate. These phosphorus compounds can be used alone or in combination of two or more thereof.

(Other Antioxidants)

Besides the acidic compound and phosphorus compound described above, an antioxidant can be further incorporated into the polycarbonate resin compositions of the invention.

Examples of the antioxidant include one or more of pentaerythritol tetrakis(3-mercaptopropionate), pentaerythritol tetrakis(3-laurylthiopropionate), glycerol 3-stearylthiopropionate, triethylene glycol bis[3-(3-tert-butyl-5-methyl-4-hydroxyphenyl)propionate], 1,6-hexanediol bis[3-(3,5-di-tert-butyl-4-hydroxyphenyl)propionate], pentaerythritol tetrakis [3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxyhydrocinnamide), 3,5-di-tert-butyl-4-hydroxybenzyl phosphonate diethyl ester, tris(3,5-di-tert-butyl-4-hydroxybenzyl) isocyanurate, tetrakis(2,4-di-tert-butylphenyl) 4,4'-biphenylenediphosphinate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane, and the like.

Preferred of these antioxidants are the aromatic monohydroxy compounds substituted with one or more alkyl groups having 5 or more carbon atoms. Specifically, octadecyl 3-(3,5-di-tert-butyl-4-hydroxyphenyl)propionate, pentaerythrityl tetrakis{3-(3,5-di-t-butyl-4-hydroxyphenyl)propionate}, 1,6-hexanediol bis[3-(3,5-di-tert-butyl-4-hydroxyphenyl) propionate], 1,3,5-trimethyl-2,4,6-tris(3,5-di-tert-butyl-4-hydroxybenzyl)benzene, and the like are preferred.
Subject to the limitations of claim 1, such an aromatic monohydroxy compound substituted with one or more alkyl groups having 5 or more carbon atoms may be further incorporated into the polycarbonate resin compositions in an amount of 0.001 part by weight to 1 part by weight, preferably 0.01 part by weight to 0.5 parts by weight, more preferably 0.02 parts by weight to 0.3 parts by weight, per 100 parts by weight of the polycarbonate resin.

Too small incorporation amounts of the antioxidant may result in the cases where the effect of inhibiting discoloration during molding is insufficient. In the case where the antioxidant is incorporated in too large an amount, there is a possibility that the composition might leave an increased amount of mold deposits when injection-molded or might leave an increased amount of roll deposits when extrusion-molded into film, resulting in an impaired surface appearance of the product.

<Release Agent>

A release agent can be incorporated into the polycarbonate resin compositions of the invention in order to further improve mold releasability for melt molding, so long as the incorporation thereof does not defeat the objects of the invention. Examples of the release agent include higher fatty acids, higher-fatty-acid esters of mono- or polyhydric

alcohols, natural animal waxes such as beeswax, natural vegetable waxes such as carnauba wax, natural petroleum waxes such as paraffin wax, natural coal waxes such as montan wax, olefin waxes, silicone oils, and organopolysiloxanes.

The higher fatty acids preferably are saturated fatty acids having 10-30 carbon atoms. Examples of such saturated fatty acids include myristic acid, lauric acid, palmitic acid, stearic acid, and behenic acid.

The higher-fatty-acid esters preferably are partial or complete esters of mono- or polyhydric alcohols having 1-20 carbon atoms with saturated fatty acids having 10-30 carbon atoms. Examples of the partial or complete esters of mono- or polyhydric alcohols with saturated fatty acids include stearic acid monoglyceride, stearic acid diglyceride, stearic acid triglyceride, stearic acid monosorbitate, stearyl stearate, behenic acid monoglyceride, behenyl behenate, pentaerythritol monostearate, pentaerythritol tetrastearate, pentaerythritol tetrapelargonate, propylene glycol monostearate, stearyl stearate, palmityl palmitate, butyl stearate, methyl laurate, isopropyl palmitate, biphenyl behenate, sorbitan monostearate, and 2-ethylhexyl stearate. Preferred of these are stearic acid monoglyceride, stearic acid triglyceride, pentaerythritol tetrastearate, and behenyl behenate.

One of these release agents may be used alone, or a mixture of two or more thereof may be used. The content of these release agents is preferably 0.0001-2 parts by weight per 100 parts by weight of the polycarbonate resin.

An antistatic agent can be incorporated into the polycarbonate resin compositions of the invention so long as the incorporation thereof does not defeat the objects of the invention. Examples of the antistatic agent include polyetheresteramides, glycerol monostearate, ammonium salts of dodecylbenzenesulfonic acid, phosphonium salts of dodecylbenzenesulfonic acid, maleic anhydride monoglyceride, and maleic anhydride diglyceride.

An ultraviolet absorber or a light stabilizer can be incorporated into the polycarbonate resin compositions of the invention so long as the incorporation thereof does not defeat the objects of the invention. Examples thereof include 2-(2'-hydroxy-5'-t-octylphenyl)benzotriazole, 2-(3-t-butyl-5-methyl-2-hydroxyphenyl)-5-chlorobenzotriazole, 2-(2'-hydroxy-5-methylphenyl)benzotriazole, 2-[2-hydroxy-3,5-bis($\alpha$,$\alpha$-dimethylbenzyl)phenyl]-2H-benzotriazole, and 2,2'-p-phenylenebis(1,3-benzoxazin-4-one). The content of such a stabilizer is preferably 0.01-2 parts by weight per 100 parts by weight of the polycarbonate resin.

A bluing agent can be incorporated into the polycarbonate resins to be used in the invention, in order to eliminate the yellowness of lenses which is attributable to the polymer or ultraviolet absorber. Any bluing agent which has conventionally been used in polycarbonate resins can be used without arousing any particular trouble. In general, anthraquinone dyes are preferred because these dyes are easily available.

With respect to specific bluing agents, representative examples thereof include common name Solvent Violet 13 [CA. No. (Color Index No.) 60725], common name Solvent Violet 31 [CA. No. 68210], common name Solvent Violet 33 [CA. No. 60725], common name Solvent Blue 94 [CA. No. 61500], common name Solvent Violet 36 [CA. No. 68210], common name Solvent Blue 97 ["Macrolex Violet RR", manufactured by Bayer AG], and common name Solvent Blue 45 [CA. No. 61110]. One of these bluing agents may be used alone, or two or more thereof may be used in combination. These bluing agents may be incorporated in an amount of generally $0.1\times10^{4}$ to $2\times10^{-4}$ parts by weight per 100 parts by weight of the polycarbonate resin.

The polycarbonate resin compositions of the invention each can be produced by mixing the ingredients either simultaneously or in any desired sequence, by means of a mixing machine such as a tumbling mixer, twin-cylinder mixer, Nauta mixer, Banbury mixer, kneading rolls, or extruder. The polycarbonate resin compositions may further contain ingredients in common use in resin compositions, such as a nucleating agent, flame retardant, inorganic filler, impact modifier, blowing agent, and dye or pigment, so long as such ingredients do not defeat the objects of the invention.

In this embodiment, a molded polycarbonate resin article is obtained by molding any of the polycarbonate resins or polycarbonate resin compositions described above. Molding methods for producing the molded polycarbonate resin article are not particularly limited. However, an injection molding method is preferred.

[3] Optical Film

An optical film can be obtained from any of the polycarbonate resins of the invention by forming the resin into a film. By stretching this optical film obtained through film formation, a retardation film can be produced. Examples of methods for film formation include conventionally known techniques such as melt extrusion and solution casting.

A composition including the polycarbonate resin of the invention and one or more other resins may also be used as a material for the optical film described above. Examples of the other resins include polycarbonate resins of other kinds obtained from bisphenol A, bisphenol Z, or the like, polycarbonate resins and polyester resins which have been modified with 9,9-bis(4-hydroxyphenyl)fluorene, 9,9-bis(3-methyl-4-hydroxyphenyl)fluorene, 9,9-bis(3-ethyl-4-hydroxyphenyl) fluorene, or the like, and polyester resins such as poly(ethylene terephthalate), poly(butylene terephthalate), poly(naphthalene dicarboxylate), poly(cyclohexanedimethylenecyclohexane dicarboxylate), and poly(cyclohexanedimethylene terephthalate).

The thickness of the optical film is generally 30 $\mu$m to 200 $\mu$m, preferably 50 $\mu$m to 150 $\mu$m. The film formed has a value of phase retardation of preferably 20 nm or less, more preferably 10 nm or less. In the case where the film has too

large a value of phase retardation, the retardation film obtained by stretching the film tends to have increased fluctuations of the value of in-plane phase retardation.

With respect to methods for stretching the optical film, known techniques for stretching can be used, such as, for example, uniaxial stretching in which the film is stretched in either the machine direction or the transverse direction and biaxial stretching in which the film is stretched in both the machine and transverse directions. It is also possible to subject the film to special biaxial stretching to regulate the three-dimensional refractive indexes of the film.

With respect to stretching conditions for producing a retardation film, it is preferred to conduct the stretching at a temperature in the range of from the temperature lower by 20°C than the glass transition temperature of the film-forming material to the temperature higher by 40°C than the glass transition temperature. More preferably, the stretching temperature is in the range of from the temperature lower by 10°C than the glass transition temperature of the film-forming material to the temperature higher by 20°C than the glass transition temperature. In the case where the stretching temperature is considerably lower than the glass transition temperature of the polycarbonate resin, the stretched film has enhanced phase retardation and this tends to result in the necessity of using a reduced stretch ratio for obtaining a desired value of phase retardation and in increased fluctuations in in-plane phase retardation. On the other hand, in the case where the stretching temperature is considerably higher than the glass transition temperature, the film obtained has reduced phase retardation. In this case, it is necessary to use an increased stretch ratio for obtaining a desired value of phase retardation, and a narrowed range of proper stretching conditions tends to result.

The retardation film can be used as a retardation plate for various liquid-crystal display devices. In the case where the retardation film is used for color compensation in an STN liquid-crystal display device, a value of phase retardation thereof is generally selected from the range of 400 nm to 2,000 nm. In the case where the retardation film is used as a half-wave plate, a value of phase retardation thereof may be selected from the range of 200 nm to 400 nm. In the case where the retardation film is used as a quarter-wave plate, a value of phase retardation thereof may be selected from the range of 90 nm to 200 nm. A more preferred value of phase retardation for the quarter-wave plate is from 100 nm to 180 nm. A single sheet of the retardation film may be used alone, or two or more sheets thereof may be used in combination. It is also possible to use a combination thereof with other film(s), etc.

The retardation film can be laminated to a known iodine-type or dye-type polarizing plate through a pressure-sensitive adhesive. In the laminating, it is necessary to laminate the retardation film so that the polarization axis of the polarizing plate forms a specific angle with the slow axis of the retardation film according to applications. The retardation film may be laminated as a quarter-wave plate to a polarizing plate, and the resultant laminate can be used as a circular polarizer. In this case, the retardation film is generally laminated so that the polarization axis of the polarizing plate and the slow axis of the retardation film form an angle of substantially 45° with each other. Furthermore, the retardation film may be laminated as a polarizer protection film as a component of a polarizing plate. Moreover, the retardation film may be used as a color compensation plate for an STN liquid-crystal display device and laminated to a polarizing plate, and the resultant laminate can be used as an elliptical polarizer.

[4] <Inorganic Filler>

Using any of the polycarbonate resins to be used in the invention, a polycarbonate resin composition can be prepared by incorporating an inorganic filler into the resin. The amount of the inorganic filler to be incorporated is from 1 part by weight to 100 parts by weight, preferably from 3 parts by weight to 50 parts by weight, per 100 parts by weight of the polycarbonate resin. Too small incorporation amounts of the inorganic filler result in an insufficient reinforcing effect. Too large amounts thereof tend to result in an impaired appearance.

Examples of the inorganic filler include glass fibers, milled glass fibers, glass flakes, glass beads, carbon fibers, silica, alumina, titanium oxide, calcium sulfate powder, gypsum, gypsum whiskers, barium sulfate, talc, mica, calcium silicate such as wollastonite, carbon black, graphite, iron powder, copper powder, molybdenum disulfide, silicon carbide, silicon carbide fibers, silicon nitride, silicon nitride fibers, brass fibers, stainless-steel fibers, and potassium titanate fibers and whiskers. Preferred of these are: fibrous glass fillers, powdery glass fillers, and flaky glass fillers; fibrous carbon fillers, powdery carbon fillers, and flaky carbon fillers; and various kinds of whiskers, mica, and talc. More preferred examples include glass fibers, glass flakes, milled glass fibers, carbon fibers, wollastonite, mica, and talc.

Of such inorganic fillers, any glass fibers or milled glass fibers which are in use with thermoplastic resins can be used. In particular, alkali-free glass (E glass) is preferred. The glass fibers have a diameter of preferably 6 μm to 20 μm, more preferably 9 μm to 14 μm. In the case where the diameter of the glass fibers is too small, the reinforcing effect thereof tends to be insufficient. In the case where the glass fibers have too large a diameter, these glass fibers are apt to adversely affect product appearance.

Preferred examples of the glass fibers include chopped strands which have been cut into a length of preferably 1 mm to 6 mm and milled glass fibers which are on the market, the milled glass fibers being in a ground form having a length of preferably 0.01 mm to 0.5 mm. These two kinds of glass fibers may be used alone or as a mixture of both.

The glass fibers to be used in the invention may be subjected, before being used, to a surface treatment with, for

example, a silane coupling agent, e.g., an aminosilane or an epoxysilane, in order to improve adhesion to the polycarbonate resin or to a sizing treatment with an acrylic resin, urethane resin, or the like in order to improve handleability.

As the glass beads, any glass beads which are in use with thermoplastic resins can be used. Of these, alkali-free glass (E glass) is preferred. With respect to the shape of glass beads, a spherical shape having a diameter of 10 μm to 50 μm is preferred.

Examples of the glass flakes include scale glass flakes. The glass flakes which have been incorporated into the polycarbonate resin may have a maximum diameter of generally 1,000 μm or less, preferably 1 μm to 500 μm, and an aspect ratio (ratio of the maximum diameter to the thickness) of 5 or greater, preferably 10 or greater, more preferably 30 or greater.

The carbon fibers are not particularly limited, and examples thereof include carbon fibers of various kinds, such as flame-resistant fibers, carbonaceous fibers, and graphitic fibers, produced from raw materials, e.g., acrylic fibers, petroleum- or coal-derived special pitches, cellulose fibers, and lignin, through burning. Such carbon fibers have an average aspect ratio (fiber length/fiber diameter) of preferably 10 or greater, more preferably 50 or greater. In the case where the carbon fibers have too small an average aspect ratio, the polycarbonate resin composition tends to be reduced in electrical conductivity, strength, and rigidity. The carbon fibers may have a diameter of 3 μm to 15 μm, and can be used in any form such as, for example, chopped strands, roving strands, or milled fibers so as to have the regulated aspect ratio. Carbon fibers of one kind may be used, or a mixture of two or more kinds of carbon fibers may be used.

The carbon fibers may be subjected to a surface treatment such as, for example, an epoxy treatment, urethane treatment, or oxidation treatment in order to enhance affinity for the polycarbonate resin, unless the surface treatment impairs the properties of the polycarbonate resin composition of the invention.

In this embodiment, the timing of adding an inorganic filler to the polycarbonate resin and methods for addition thereof are not particularly limited. Examples of the timing of addition include the following. In the case where the polycarbonate resin was produced by a transesterification method, the filler may be added at the time of completion of the polymerization reaction. Examples of the timing of addition further include the following, regardless of polymerization method: the time when the polycarbonate resin is in a molten state as in the step of kneading the polycarbonate resin together with other compounding ingredients; and the time when the polycarbonate resin in a solid state, e.g., a pellet or powder form, is blended/kneaded by means of an extruder or the like. Examples of addition methods include: a method in which the inorganic filler is directly mixed or kneaded with the polycarbonate resin; and a method in which the inorganic filler is added as a high-concentration master batch produced using the inorganic filler and a small amount of the polycarbonate resin, another resin, etc.

[5] <Flame Retardant>

Another polycarbonate resin composition is prepared by incorporating a flame retardant into any of the polycarbonate resins to be used in the invention. The amount of the flame retardant to be incorporated is selected according to the kind of the flame retardant and the degree of flame retardancy. In this embodiment, the amount of the flame retardant is in the range of 0.01 part by weight to 30 parts by weight, preferably 0.02 parts by weight to 25 parts by weight, per 100 parts by weight of the polycarbonate. By incorporating a flame retardant, a polycarbonate resin composition having excellent flame retardancy is obtained.

Examples of the flame retardant include phosphorus-compound-based flame retardants, halogen-compound-based flame retardants, metal-sulfonate-based flame retardants, and silicon-compound-based flame retardants. In this embodiment, at least one member selected from these flame retardants can be used. These flame retardants may be used alone or in combination of two or more thereof.

Examples of the phosphorus-compound-based flame retardants include phosphoric ester compounds, phosphazene compounds, red phosphorus, coated red phosphorus, and polyphosphate compounds. The amount of such a phosphorus-compound-based flame retardant to be incorporated is preferably 0.1 part by weight to 20 parts by weight per 100 parts by weight of the polycarbonate. In the case where the amount of the flame retardant incorporated is too small, sufficient flame retardancy is difficult to obtain. In the case where the amount thereof is too large, heat resistance is apt to decrease.

Examples of the halogen-compound-based flame retardants include tetrabromobisphenol A, tribromophenol, brominated aromatic triazines, tetrabromobisphenol A epoxy oligomers, tetrabromobisphenol A epoxy polymers, decabromodiphenyl oxide, tribromoallyl ether, tetrabromobisphenol A carbonate oligomers, ethylenebistetrabromophthalimide, decabromodiphenylethane, brominated polystyrene, and hexabromocyclododecane.

The amount of such a halogen-compound-based flame retardant to be incorporated may be 0.1 part by weight to 20 parts by weight per 100 parts by weight of the polycarbonate resin. In the case where the amount of the halogen-compound-based flame retardant incorporated is too small, sufficient flame retardancy is difficult to obtain. In the case where the amount thereof is too large, not only the polycarbonate resin composition has reduced mechanical strength but also there are the cases where the flame retardant is causative of the discoloration caused by flame-retardant bleeding.

Examples of the metal-sulfonate-based flame retardants include metal salts of aliphatic sulfonic acids, metal salts of aromatic sulfonic acids, and metal salts of perfluoroalkanesulfonic acids. Preferred examples of the metals of these metal salts include metals in Group 1 of the periodic table and metals in Group 2 of the periodic table. Specific examples are: alkali metals such as lithium, sodium, potassium, rubidium, and cesium; alkaline earth metals such as calcium, strontium, and barium; and beryllium and magnesium.

Preferred of the metal-sulfonate-based flame retardants, from the standpoints of flame retardancy and thermal stability, are metal salts of aromatic sulfonesulfonic acids, metal salts of perfluoroalkanesulfonic acids, and the like.

Preferred metal salts of aromatic sulfonesulfonic acids are alkali metal salts of aromatic sulfonesulfonic acids and alkaline earth metal salts of aromatic sulfonesulfonic acids. These salts may be polymers. Specific examples of the metal salts of aromatic sulfonesulfonic acids include the sodium salt of (diphenyl sulfone)-3-sulfonic acid, the potassium salt of (diphenyl sulfone)-3-sulfonic acid, the sodium salt of (4,4'-dibromodiphenyl sulfone)-3-sulfonic acid, the potassium salt of (4,4'-dibromodiphenyl sulfone)-3-sulfonic acid, the calcium salt of (4-chloro-4'-nitrodiphenyl sulfone)-3-sulfonic acid, the disodium salt of (diphenyl sulfone)-3,3'-disulfonic acid, and the dipotassium salt of (diphenyl sulfone)-3,3'-disulfonic acid.

Preferred metal salts of perfluoroalkanesulfonic acids are alkali metal salts of perfluoroalkanesulfonic acids, alkaline earth metal salts of perfluoroalkanesulfonic acids, and the like. More preferred are alkali metal sulfonates having a perfluoroalkane group having 4-8 carbon atoms, alkaline earth metal sulfonates having a perfluoroalkane group having 4-8 carbon atoms, and the like.

Specific examples of the metal salts of perfluoroalkanesulfonic acids include sodium perfluorobutanesulfonate, potassium perfluorobutanesulfonate, sodium perfluoromethylbutanesulfonate, potassium perfluoromethylbutanesulfonate, sodium perfluorooctanesulfonate, potassium perfluorooctanesulfonate, and tetraethylammonium perfluorobutanesulfonate.

The amount of such a metal-sulfonate-based flame retardant to be incorporated is preferably 0.01-5 parts by weight per 100 parts by weight of the polycarbonate. In the case where the amount of the metal-sulfonate-based flame retardant incorporated is too small, sufficient flame retardancy is difficult to obtain. Too large amounts thereof are apt to result in reduced thermal stability.

Examples of the silicon-compound-based flame retardants include silicone varnishes, silicone resins which have silicon-bonded substituents including aromatic hydrocarbon groups and aliphatic hydrocarbon groups having 2 or more carbon atoms, silicone compounds which have a main chain of a branched structure and contain organic functional groups including an aromatic group, silicone powders configured of silica particles and, supported on the surface thereof, a polydiorganosiloxane polymer which may have a functional group, and organopolysiloxane/polycarbonate copolymers. Preferred of these are silicone varnishes.

Examples of the silicone varnishes include solution-state silicone resins which have a relatively low molecular weight and which consist mainly of a difunctional unit [$R0_2SiO$] and a trifunctional unit [$R0SiO_{1.5}$] and may contain a monofunctional unit [$R0_3SiO_{0.5}$] and/or a tetrafunctional unit [$SiO_2$]. Symbol R0 represents a hydrocarbon group having 1-12 carbon atoms or a hydrocarbon group having 1-12 carbon atoms and substituted with one or more substituents. Examples of the substituents include an epoxy group, amino group, hydroxyl group, and vinyl group. By changing the kind of R0, compatibility with the matrix resin can be improved.

Examples of the silicone varnishes including solvent-free silicone varnishes and solvent-containing silicone varnishes. In this embodiment, silicone varnishes containing no solvent are preferred. Silicone varnishes can be produced, for example, by hydrolyzing alkylalkoxysilanes such as alkyltrialkoxysilanes, dialkyldialkoxysilanes, trialkylalkoxysilanes, and tetraalkoxysilanes. It is possible to control molecular structure (degree of crosslinking) and molecular weight by regulating the molar ratio of these starting materials, the rate of hydrolysis, etc. Although alkoxysilanes may remain depending on production conditions, there are the cases where the alkoxysilanes remaining in the composition reduce the hydrolytic resistance of the polycarbonate resin. It is therefore desirable that the amount of residual alkoxysilanes should be slight or nil.

The silicone varnishes have a viscosity of preferably 300 cSt or lower, more preferably 250 cSt or lower, even more preferably 200 cSt or lower. Too high viscosities of the silicone varnishes may result in insufficient flame retardancy.

The amount of such a silicon-compound-based flame retardant to be incorporated is preferably 0.1-10 parts by weight per 100 parts by weight of the polycarbonate resin. In the case where the amount of the silicon-compound-based flame retardant incorporated is too small, sufficient flame retardancy is difficult to obtain. Too large amounts thereof are apt to result in reduced heat resistance.

In this embodiment, it is preferred that a flame retardant should be used in combination with polytetrafluoroethylene for dripping prevention in order to attain higher flame retardancy. Polytetrafluoroethylene for dripping prevention readily disperses in polymers and tends to bond polymer molecules to each other to form a fibrous material. Examples of polytetrafluoroethylene which is on the market as an additive for dripping prevention include Teflon (registered trademark) 6J, Teflon (registered trademark) 30J (Du Pont-Mitsui Fluorochemicals Co., Ltd.), and Polyflon F201L (Daikin Chemical Industries, Ltd.).

The amount of polytetrafluoroethylene for dripping prevention to be incorporated is preferably 0.01 part by weight

to 2.0 parts by weight per 100 parts by weight of the polycarbonate resin. In the case where polytetrafluoroethylene for dripping prevention is incorporated in too small an amount, the effect of preventing the polycarbonate resin from melting and dripping when burned is insufficient. Too large amounts thereof are apt to result in an impaired appearance of molded articles.

The polycarbonate resin compositions of the invention can contain various additives in respective amounts sufficient for the additives to produce the effects thereof, so long as the effects of the invention are not lessened thereby. Examples of the additives include stabilizers, ultraviolet absorbers, release agents, colorants, and antistatic agents. Furthermore, a thermoplastic resin such as a styrene resin or a polyester resin, a thermoplastic elastomer, an inorganic filler such as glass fibers, glass flakes, glass beads, carbon fibers, wollastonite, calcium silicate, or aluminum borate whiskers, and the like can be incorporated besides those additives in order to obtain suitability for various applications and desired performances.

There are no particular limitations on methods for mixing the polycarbonate resin to be used in this embodiment with the additives and other ingredients and on the timing of mixing. With respect to the timing of mixing, for example, the additives and other ingredients can be added during the polymerization reaction or at the time of completion of the polymerization reaction, or can be added when the polycarbonate is in a molten state as in the step of kneading the polycarbonate, etc. It is also possible to blend the additives and other ingredients with the polycarbonate which is in a solid state, e.g., a pellet or powder form, and then knead the mixture by means of an extruder or the like.

[6] <Ultraviolet Absorber>

In this embodiment, a polycarbonate resin composition is prepared by incorporating an ultraviolet absorber into any of the polycarbonate resins to be used in the invention. The amount of the ultraviolet absorber to be incorporated is selected according to the kind of the ultraviolet absorber. In this embodiment, the amount of the ultraviolet absorber is 0.005 parts by weight to 5 parts by weight per 100 parts by weight of the polycarbonate.

The ultraviolet absorber is not particularly limited so long as the absorber is a compound having the ability to absorb ultraviolet rays. In this embodiments, compounds showing absorption at wavelengths of 200 nm to 240 nm are preferred. Furthermore, compounds having an extinction coefficient $\varepsilon$ for light with wavelengths of 200 nm to 240 nm of 10,000 mL/(g·cm) or higher, preferably 15,000 mL/(g·cm) or higher, are preferred.

The absorbance of an ultraviolet absorber, which indicates the ability thereof to absorb ultraviolet rays, can be measured in accordance with JIS K0115 "General Rules for Absorptiometric Analysis". In this embodiment, extinction coefficient $\varepsilon$ is expressed in terms of mL/(g·cm) since it is difficult to express the concentration in terms of mol. Except for this, the measurement is made in accordance with the JIS K0115.

<Measurement of Molar Extinction Coefficient>

In this embodiments, molar extinction coefficient was measured by the following method.

In accordance with JIS K0115 "General Rules for Absorptiometric Analysis", about 10 mg of an ultraviolet absorber was dissolved in 10 mL of acetonitrile placed in a glass bottle. A 0.1-mL portion of the solution was transferred to another glass bottle, and 9.9 mL of acetonitrile was introduced thereinto to dissolve the ultraviolet absorber therein. This solution was put in a quartz cell having an optical path length of 10 mm, and was examined for absorbance A with a spectrophotometer for ultraviolet and visible regions (V-570, manufactured by JASCO Corp.) using the measuring mode "Abs" and the response "Medium" under the conditions of measuring wavelengths of 190-800 nm and a band width of 2 nm. A molar extinction coefficient $\varepsilon$ was determined by dividing the absorbance A measured at each wavelength by the product of the molar concentration c of the solution and the optical path length L of the cell. The molar concentration c of the solution was determined by dividing the concentration of the solution by the molecular weight of the ultraviolet absorber. With respect to the determined molar extinction coefficients $\varepsilon$ of the ultraviolet absorber, it is preferred in the invention that the ratio of the molar extinction coefficient thereof at a wavelength of 210 nm ($\varepsilon_{210}$) to the maximum molar extinction coefficient thereof in the wavelength range of 250 nm to 350 nm ($\varepsilon_{250\text{-}350}$), $\varepsilon_{210}/\varepsilon_{250\text{-}350}$, should be less than 1.75. The ratio $\varepsilon_{210}/\varepsilon_{250\text{-}350}$ is more preferably less than 1.73, in particular, less than 1.72.

In this embodiment, examples of the compound having the ability to absorb ultraviolet rays include organic compounds and inorganic compounds. Of these, organic compounds are preferred because it is easy to ensure an affinity for the polycarbonate resin and to evenly disperse organic compounds.

The molecular weights of the organic compounds having the ability to absorb ultraviolet rays are not particularly limited. The molecular weights thereof are generally 200 or higher, preferably 250 or higher, and are generally 600 or lower, preferably 450 or lower, more preferably 400 or lower. In the case where the molecular weights thereof are too low, there is a possibility that the polycarbonate resin composition might be reduced in ultraviolet resistance during long-term use. In the case where the molecular weights thereof are too high, there is a possibility that the resin composition might be reduced in transparency during long-term use.

Preferred ultraviolet absorbers include benzotriazole compounds, benzophenone compounds, triazine compounds, benzoate compounds, hindered amine compounds, phenyl salicylate compounds, cyanoacrylate compounds, malonic ester compounds, and oxalanilide compounds. Preferred of these are triazine compounds, malonic ester compounds, and oxalanilide compounds. These ultraviolet absorbers may be used alone or in combination of two or more thereof.

Specific examples of the benzotriazole compounds include 2-(2'-hydroxy-3'-methyl-5'-hexylphenyl)benzotriazole, 2-(2'-hydroxy-3'-t-butyl-5'-hexylphenyl)benzotriazole, 2-(2'-hydroxy-3',5'-di-t-butylphenyl)benzotriazole, 2-(2'-hydroxy-3'-methyl-5'-t-octylphenyl)benzotriazole, 2-(2'-hydroxy-5'-t-dodecylphenyl)benzotriazole, 2-(2'-hydroxy-3'-methyl-5'-t-dodecylphenyl)benzotriazole, 2-(2'-hydroxy-5'-t-butylphenyl)benzotriazole, and methyl 3-(3-(2H-benzotriazol-2-yl)-5-t-butyl-4-hydroxyphenyl)propionate.

Examples of the triazine compounds include 2-[4-[(2-hydroxy-3-dodecyloxypropyl)oxy]-2-hydroxyphenyl]-4,6-bis(2,4-dimethylphenyl)-1,3,5-triazine, 2,4-bis(2,4-dimethylphenyl)-6-(2-hydroxy-4-isooctyloxyphenyl)-s-triazine, and 2-(4,6-diphenyl-1,3,5-triazin-2-yl)-5-[(hexyl)oxy]phenol (Tinuvin 1577FF, manufactured by Ciba-Geigy Ltd.).

Examples of hydroxybenzophenone compounds include 2,2'-dihydroxybenzophenone, 2,2',4,4'-tetrahydroxybenzophenone, and 2-hydroxy-4-octoxybenzophenone.

Examples of the cyanoacrylate compounds include ethyl 2-cyano-3,3-diphenylacrylate and 2- ethylhexyl 2-cyano-3,3-diphenylacrylate.

Examples of the malonic ester compounds include 2-(1-arylalkylidene)malonic esters. Preferred of these are [(4-methoxyphenyl)methylene]dimethyl malonate (Hostavin PR-25, manufactured by Clariant) and dimethyl 2-(p-methoxybenzylidene)malonate.

Examples of the oxalanilide compounds include 2-ethyl-2'-ethoxyoxalanilide (Sanduvor VSU, manufactured by Clariant).

Preferred of these are 2-(2'-hydroxy-3'-t-butyl-5'-hexylphenyl)benzotriazole, 2-(2'-hydroxy-5'-t-butylphenyl) benzotriazole, 2-[4-[(2-hydroxy-3-dodecyloxypropyl)oxy]-2-hydroxyphenyl]-4,6-bis(2,4-dimethylphenyl)-1,3,5-triazine, and 2,2',4,4'-tetrahydroxybenzophenone.

There are no particular limitations on methods for mixing the polycarbonate resin to be used in this embodiment with the additive and other ingredients and on the timing of mixing. With respect to the timing of mixing, for example, the additive and other ingredients can be added during the polymerization reaction or at the time of completion of the polymerization reaction, or can be added when the polycarbonate is in a molten state as in the step of kneading the polycarbonate, etc. It is also possible to blend the additive and other ingredients with the polycarbonate which is in a solid state, e.g., a pellet or powder form, and then knead the mixture by means of an extruder or the like.

The polycarbonate resin composition of the invention can be produced by mixing the ingredients either simultaneously or in any desired sequence, by means of a mixing machine such as a tumbling mixer, twin-cylinder mixer, Nauta mixer, Banbury mixer, kneading rolls, or extruder. The polycarbonate resin composition may further contain ingredients in common use in resin compositions, such as a nucleating agent, flame retardant, inorganic filler, impact modifier, blowing agent, and dye or pigment, so long as such ingredients do not defeat the objects of the invention.

[7] <Thermoplastic Resin>

In this embodiment, a polycarbonate resin composition is prepared by incorporating a thermoplastic resin into any of the polycarbonate resins to be used in the invention. The amounts of the polycarbonate resin and thermoplastic resin to be blended are not particularly limited. In this embodiment, however, the amount of the polycarbonate resin is in the range of 10 parts by weight to 90 parts by weight, and the amount of the thermoplastic resin is in the range of 90 parts by weight to 10 parts by weight.

Examples of the thermoplastic resin include aromatic polyester resins such as poly(ethylene terephthalate), poly(propylene terephthalate), poly(butylene terephthalate), and poly(cyclohexanedimethanol terephthalate); saturated polyester resins such as aliphatic polyester resins, e.g., poly(lactic acid), poly(butylene succinate), and poly(cyclohexanedimethanol cyclohexanedicarboxylate); aromatic polycarbonate resins formed from various bisphenols including bisphenol A and bisphenol Z; alicyclic polycarbonate resins formed from alicyclic diols such as 3(4),8(9)-bis(hydroxymethyl)tricyclo[5.2.1.02,6]decane; polycarbonate resins such as aliphatic polycarbonate resins formed from heterocyclic diols, e.g., 3,9-bis(1,1-dimethyl-2-hydroxyethyl)-2,4,8,10-tetraoxaspiro[5,5]undecane; aliphatic polyamide resins such as 6, 66, 46, and 12; polyamide resins such as semiaromatic polyamide resins, e.g., 6T, 6I, and 9T; styrene resins such as polystyrene resins, high-impact polystyrene resins, acrylonitrile/styrene resins (AS), acrylonitrile/butadiene/styrene resins (ABS), hydrogenated ABS resins (AES), and crystalline syndiotactic polystyrene resins; acrylic resins such as PMMA and MBS; low-density, medium-density, and high-density polyethylenes and ethylene copolymer resins such as ethylene/methacrylate copolymers (EMA), ethylene/vinyl acetate copolymers (EVA), and ethylene/glycidyl methacrylate copolymers (E/GMA); olefin resins such as polypropylene resins, 4-methylpentene-1 resins, cycloolefin polymers (COP), and cycloolefin copolymers (COC); and thermoplastic resins, such as polyacetal resins, poly(amide-imide) resins,

poly(ether sulfone) resins, polyimide resins, poly(phenylene oxide) resins, poly(phenylene sulfide) resins, poly(phenyl sulfone) resins, polyetheretherketones, liquid-crystalline polyester resins, thermoplastic polyurethane resins, poly(vinyl chloride) resins, and fluororesins, and mixtures of these.

These thermoplastic resins may be used alone or as a mixture of two or more thereof, and one or more thermoplastic resins to be used can be suitably selected from these according to the intended use thereof while taking account of required properties such as heat resistance, chemical resistance, and moldability. Those thermoplastic resins may be subjected to graft modification or terminal modification with an unsaturated compound, e.g., maleic anhydride, before being used.

There are no particular limitations on methods for mixing the polycarbonate resin to be used in this embodiment with the thermoplastic resin and other ingredients and on the timing of mixing. With respect to the timing of mixing, for example, the thermoplastic resin can be added during the polymerization reaction or at the time of completion of the polymerization reaction, or can be added when the polycarbonate is in a molten state as in the step of kneading the polycarbonate, etc. It is also possible to blend the thermoplastic resin with the polycarbonate which is in a solid state, e.g., a pellet or powder form, and then knead the mixture by means of an extruder or the like.

The polycarbonate resin composition of the invention can be produced by mixing the ingredients either simultaneously or in any desired sequence, by means of a mixing machine such as a tumbling mixer, twin-cylinder mixer, Nauta mixer, Banbury mixer, kneading rolls, or extruder. The polycarbonate resin composition may further contain ingredients in common use in resin compositions, such as a nucleating agent, flame retardant, inorganic filler, impact modifier, blowing agent, and dye or pigment, so long as such ingredients do not defeat the objects of the invention.

## Examples

The invention will be explained below in more detail by reference to Examples. However, the invention should not be construed as being limited to the following Examples.

In the following, properties of polycarbonate resins and polycarbonate resin compositions were evaluated by the following methods.

### (1) Reduced Viscosity

A Ubbelohde viscometer (automatic viscometer Type DT-504, manufactured by Chuo Rika Corp.) was used. A 1/1 mixed solvent composed of phenol and 1,1,2,2-tetrachloroethane was used as a solvent to make a measurement at a temperature of 30.0°C±0.1°C. A solution was precisely prepared so as to have a concentration of 1.00 g/dL.

A sample was dissolved with stirring at 120°C for 30 minutes, and the resultant solution was subjected to the measurement after cooling.

Relative viscosity $\eta_{rel}$ was determined from the flow time for the solvent t0 and the flow time for the solution t using the following equation.

$$\eta_{rel} = t/t_0 \ (g \cdot cm^{-1} \cdot sec^{-1})$$

Specific viscosity $\eta_{sp}$ was determined from the relative viscosity $\eta_{rel}$ using the following equation.

$$\eta_{sp} = (\eta - \eta_0)/\eta_0 = \eta_{rel} - 1$$

The specific viscosity $n_{sp}$ was divided by the concentration c (g/dL) to determine the reduced viscosity $\eta_{red}$ using the following equation.

$$\eta_{red} = \eta_{sp}/c$$

The larger the value of $\eta_{red}$, the higher the molecular weight.

### (2) Hue Measurement

A colorimetric color difference meter (ZE-2000, manufactured by Nippon Denshoku Kogyo K.K.) was used to measure the three stimulus values of color by the illuminant-C transmission method, and a value of yellow index (YI) was calculated as an index to yellowing, using the following equation.

$$\text{Yellow index YI} = 100\times(1.28X-1.06Z)/Y$$

(3) Hydrolytic Resistance

Pellets obtained through kneading with a twin-screw extruder were subjected to a pressure cooker test, in which the pellets were allowed to stand still at 110°C ($1.5\times10^5$ Pa) for 24 hours. After the test, the sample was dried at 100°C and $1.3\times10^3$ Pa for 5 hours to remove moisture therefrom. Before and after the test, the sample was examined for reduced viscosity. The retention of reduced viscosity was calculated in accordance with the following equation.

Retention of reduced viscosity (%) = [(reduced viscosity after the test)/(reduced viscosity before the test)]$\times$100

(4) Evaluation of Injection Molding (ordinary-molding ΔYI, percent appearance defective, release failure, and mold deposits)

Pellets obtained through kneading with a twin-screw extruder were subjected to 100-shot molding at 240°C using an injection molding machine (MINIMAT 8/7A, manufactured by Sumitomo Heavy Industries, Ltd.) to obtain molded flat plates each having dimensions of 30 mm $\times$ 30 mm $\times$ 2 mm (t). Thereafter, the molded flat plates were examined for hue in terms of the YI (referred to as "additive-containing article YI").

Ordinary-molding ΔYI was calculated in accordance with the following equation using, as a reference, YI values for molded flat plates obtained by molding four kinds of polycarbonate resins prepared beforehand as will be described later (PC resin A, PC resin B, PC resin C, and PC resin D) without incorporating an acidic compound, etc. (the YI values each are referred to as "additive-free article YI").

Ordinary-molding ΔYI ≡ (additive-containing article YI)-(additive-free article YI)

The additive-free article YI of each of the four polycarbonate resins is as follows. As will be described later, the YI of Example 13, the YI of Example 14, and the YI of Comparative Example 13 were used for PC resin A, PC resin B, and PC resin D, respectively, as references. With respect to PC resin C, use was made of the value of YI measured in the same manner as in Example 13 except that PC resin C-1 was used.

Percentage appearance defective (%) was determined by calculating the proportion of the number of articles having an appearance defect, e.g., a silver streak or a black streak, to the number of all molded articles, using the following equation.

Percentage appearance defective ≡ (number of appearance defectives)/(number of all molded articles)

Release failure and mold deposits were evaluated in the following manner. Pellets obtained through kneading with a twin-screw extruder were predried at 80°C for 4 hours. The predried pellets of each material were subjected to 100-shot molding using injection molding machine Type J75EII, manufactured by The Japan Steel Works, Ltd., under the conditions of a cylinder temperature of 230°C, a molding cycle of 45 seconds, and a mold temperature of 60°C to mold flat plates having dimensions of 60 mm $\times$ 60 mm $\times$ 3 mm (t). Whether a mold release failure occurred during molding or not and the amount of deposits present on the front mold after the 100-shot molding were visually examined.

(5) Evaluation of Molding Residence (molding residence ΔYI)

Using an injection molding machine (MINIMAT 8/7A, manufactured by Sumitomo Heavy Industries, Ltd.), pellets obtained through kneading with a twin-screw extruder were molded in the following manners. In an ordinary manner, the pellets were subjected to 7-shot molding at a cylinder temperature of 240°C (ordinary molded articles). Alternatively, the resin was caused to reside in the molding machine (240°C) for 10 minutes and then subjected to 7-shot molding (residence molded articles). Thus, molded flat plates each having dimensions of 30 mm $\times$ 30 mm $\times$ 2 mm (t) were obtained. Thereafter, the molded flat plates were examined for hue in terms of the YI, and an average value for the articles which had not undergone residence and an average value for the articles produced through residence were determined. A molding residence ΔYI was then calculated in accordance with the following equation.

Molding residence ΔYI = (YI of the residence molded articles)-(YI of the ordinary molded articles)

(6) Analysis of End Group Structure

An examination for $^1$H-NMR spectrum was made with an NMR spectrometer (AVANCE DRX400, manufactured by Bruker GmbH) using TMS-containing heavy chloroform as a measuring solvent.

The peak detected in a chemical-shift range of 6.6 ppm to 6.7 ppm based on TMS was taken as a peak assigned to the end group represented by structural formula (2) described above (referred to as "double-bond end"). Likewise, the peak detected in a chemical-shift range of 7.3 ppm to 7.5 ppm based on TMS was taken as a peak assigned to the end group represented by structural formula (5) described above (referred to as "phenyl-group end"). The number of each kind of ends per 100 repeating units of the polymer was calculated from an areal ratio among the peaks assigned respectively to all ends. Thereafter, the proportion of double-bond ends and the proportion of phenyl-group ends were calculated in accordance with the following equations.

Proportion of double-bond ends (%) = [(number of end groups of formula (2))/(number of all end groups)]$\times$100

Proportion of phenyl-group ends (%)= [(number of end groups of formula (5))/(number of all end groups)]$\times$100

(7) Amount of Residual Carbonic Diester and Content of Dihydroxy Compound having Linking Structure of Structural Formula (1) (Residual Monomer Amount)

In 10 mL of chloroform was dissolved 1.0 g of resin pellets. This solution was subjected to a reprecipitation treatment in which 20 mL of methanol was further added thereto. The filtrate was concentrated to dryness using nitrogen gas, and the resultant residue was redissolved in 1 mL of acetonitrile. The amounts of diphenyl carbonate and the dihydroxy compound having a linking structure of structural formula (1) were determined by GC (gas chromatography). Thereafter, the amounts of these compounds remaining in the resin were calculated.

(GC/FID Determination Conditions)

· Apparatus: HP6890, manufactured by Agilent Technologies, Inc.
· Analysis column: TC-1, manufactured by GL Sciences Inc.
· Oven temperature: 100°C $\times$ 1 min $\rightarrow$ 10°C/min $\rightarrow$ 240°C $\rightarrow$ 15°C/min $\rightarrow$ 320°C $\times$ 5 min
· Detector: hydrogen flame ionization detector
· Detector temperature: 325°C
· Carrier gas: He, 1 mL/min
· Sample injection amount: 1 $\mu$L

In Tables 3 and 4, residual amounts of 10 ppm or less are shown as 10 ppm because of reduced accuracy of determination.

(8) Residual Phenol Amount

Resin pellets were dissolved in chloroform, and this solution was subjected to a reprecipitation treatment in which methanol was further added thereto. The supernatant was centrifuged, subsequently filtered through a filter, and then subjected to phenol determination by HPLC (high-performance liquid chromatography). Thereafter, the residual amount was calculated.

HPLC Determination Conditions

· Apparatus: Agilent 1100, manufactured by Agilent Technologies, Inc.
· Analysis column: Mightysil RP-18, manufactured by Kanto Chemical Co., Inc.
· Eluent: 0.2% aqueous acetic acid solution/methanol; gradient
· Detection wavelength: 280 nm
· Column chamber temperature: 40°C

(9) Evaluation of Extruded Film

A polycarbonate resin sample which had been vacuum-dried at 80°C for 5 hours was kneaded by means of a

twin-screw extruder to obtain pellets. The pellets were extruded at 240°C with a single-screw extruder equipped with a T-die at the front, and was then rapidly cooled with a 95°C casting roll to obtain a sheet for stretching which had a thickness of about 100 μm. This film was evaluated in the following manners.

· Bright-Spot Defects

Two polarizing plates were disposed in a perpendicularly crossed state (crossed Nicols) to block transmitted light, and the film sample produced was placed between the two polarizing plates. The polarizing plates used were ones including a protective glass plate. The film sample was irradiated with light from one side, and the number of bright spots having a diameter of 0.01 mm or more per 1 $cm^2$ was counted from the opposite side by means of an optical microscope (50 magnifications).

A: The number of bright spots was 0-30
B: The number was 31-50
C: The number was 51-80
D: The number was 81-100
E: The number was 101 or more

· Roll Fouling (Suitability for Sheet Forming)

A sheet having a thickness of 100 μm was formed using a single-screw extruder and a sheeting die. The degree of deposition of volatile components on the mirror surface of the roll during the sheet formation was visually examined and evaluated in accordance with the following criteria.

A: Slight deposition of volatile components
B: Normal degree of deposition of volatile components
C: Considerable deposition of volatile components
D: Extremely considerable deposition of volatile components

(10) Photoelastic Coefficient

An examination was made using an apparatus configured by combining a birefringence analyzer including a He-Ne laser, polarizer, compensator, analyzer, and light detector with a vibration type viscoelastometer (DVE-3, manufactured by Rheology Co., Ltd.). (For details, refer to Journal of The Society of Rheology, Japan, Vol.19, pp.93-97 (1991).)

A sheet having a thickness of about 100 μm was formed using a single-screw extruder and a sheeting die in the same manner as for the evaluation of roll fouling. A sample having a width of 5 mm and a length of 20 mm was cut out of the sheet. The sample was fixed to the viscoelastometer and examined for storage modulus E' at room temperature of 25°C and a frequency of 96 Hz. Simultaneously therewith, the laser light emitted was passed through the polarizer, sample, compensator, and analyzer in this order and picked up with the light detector (photodiode), and the signals were passed through a lock-in amplifier. With respect to waveform at an angular frequency of ω or 2ω, the amplitude and the phase difference caused by the strain were determined to determine a strain-optical coefficient O'. For this operation, the direction of the polarizer and that of the analyzer were regulated so as to be perpendicular to each other and each form an angle of π/4 with the stretching direction of the sample.

A photoelastic coefficient C was determined from the storage modulus E' and the strain-optical coefficient O' using the following equation.

$$C = O'/E'$$

<Distillation of Isosorbide>

The isosorbide to be used here for producing heterocycle-containing polycarbonate resins A and B was distilled in the following manner.

Isosorbide was introduced into a distillation vessel. Thereafter, gradual pressure reduction was initiated, and the contents were then heated. The isosorbide dissolved at an internal temperature of about 100°C. Thereafter, a distillate began to be discharged at an internal temperature of 160°C. At this stage, the pressure was 133-266 Pa. After the initial distillate was obtained, distillation was performed at an internal temperature of 160-170°C, column top temperature of 150-157°C, and 133 Pa. After completion of the distillation, argon was introduced to return the internal pressure to ordinary

pressure. The distilled product obtained was pulverized with cooling in an argon stream to obtain distillation-purified isosorbide. This isosorbide was stored in a sealed aluminum laminate bag together with Ageless (manufactured by Mitsubishi Gas Chemical Co., Ltd.) enclosed therein, at room temperature in a nitrogen stream.

(EXAMPLE 1 TO EXAMPLE 7)

(Production of Heterocycle-Containing Polycarbonate Resin A-1)

Into a reaction vessel were introduced 54,220 parts by weight of the distilled isosorbide (ISB), 31,260 parts by weight of tricyclodecanedimethanol (hereinafter abbreviated to "TCDDM"), 117,957 parts by weight of diphenyl carbonate (DPC), and $2.2\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.

In the twin-screw extruder, the additives were continuously added so as to result in the composition shown in Table 1. Simultaneously therewith, in each vent part, low-molecular substances including phenol were volatilized with water injection and removed. Thereafter, the resin was pelletized with a pelletizer to obtain heterocycle-containing polycarbonate resin A-1 (referred to as "PC resin A-1"), which had an isosorbide (ISB)/TCDDM ratio of 70/30 (mol% ratio).

In Fig. 1(A) and Fig. 1(B) is shown a $^1$H-NMR chart of the heterocycle-containing polycarbonate resin A-1. Fig. 1(B) is a chart obtained by enlarging part (around 6.2-7.8 ppm) of Fig. 1(A).

(Production of Heterocycle-Containing Polycarbonate Resin B-1)

Into a reaction vessel were introduced 73,070 parts by weight of isosorbide (ISB), 109,140 parts by weight of diphenyl carbonate (DPC), and $2.0\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.

In the twin-screw extruder, the additives were continuously added so as to result in the composition shown in Table 1. Simultaneously therewith, in each vent part, low-molecular substances including phenol were volatilized with water injection and removed. Thereafter, using a pelletizer, pellets of heterocycle-containing polycarbonate resin B-1 were obtained (referred to as "PC resin B-1").

(Production of Heterocycle-Containing Polycarbonate Resin C-1)

Into a reaction vessel were introduced 59,630 parts by weight of the distilled isosorbide (ISB), 25,218 parts by weight of 1,4-cyclohexanedimethanol (hereinafter abbreviated to "CHDM"), 124,867 parts by weight of diphenyl carbonate (DPC), and $2.4\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced. The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.

In the twin-screw extruder, the additives were continuously added so as to result in the composition shown in Table 1. Simultaneously therewith, in each vent part, low-molecular substances including phenol were volatilized with water injection and removed. Thereafter, the resin was pelletized with a pelletizer to obtain heterocycle-containing polycarbonate resin C (referred to as "PC resin C-1"), which had an isosorbide (ISB)/CHDM ratio of 70/30 (mol% ratio).

The results are shown in Table 1. The monomers, antioxidants, and acidic compound which are shown in Table 1 are as follows.

(Monomers)

ISB: isosorbide
TCDDM: tricyclodecanedimethanol
BPA: bisphenol A
CHDM: cyclohexanedimethanol
(Antioxidants)
Irganox 259: 1,6-hexanediol bis{3-(3,5-di-t-butyl-4-hydroxyphenyl)propionate}
(manufactured by Ciba Specialty Chemicals Co.)
Irganox 1010: pentaerythrityl tetrakis{3-(3,5-di-t-butyl-4-hydroxyphenyl)propionate
(manufactured by Ciba Specialty Chemicals Co.)
ADK Stab PEP-4C: bis(nonylphenyl)pentaerythritol diphosphite (manufactured by Adeka Corp.)
ADK Stab PEP-8: distearylpentaerythritol diphosphite (manufactured by Adeka Corp.)
ADK Stab PEP-36: bis(2,6-di-t-butyl-4-methylphenyl)pentaerythrityl diphosphite)
(manufactured by Adeka Corp.)
Irgafos 168: tris(2,4-di-tert-butylphenyl) phosphite manufactured by Ciba Specialty Chemicals Co.)

(Acidic Compound)

Butyl p-toluenesulfonate: manufactured by Tokyo Kasei Kogyo Co., Ltd.

[Table 1]

| | | Example | | | | | | |
|---|---|---|---|---|---|---|---|---|
| | | 1 | 2 | 3 | 4 | 5 | 6 | 7 |
| PC resin A-1 (parts by weight) | (monomers) ISB+TCDDM | 99.8894 | 99.8394 | 99.8394 | 99.8394 | - | - | - |
| PC resin B-1 (parts by weight) | (monomer) ISB | - | - | - | - | 99.8894 | 99.8394 | - |
| PC resin C-1 (parts by weight) | (monomers) ISB+CHDM | - | - | - | - | - | - | 99.8394 |

(continued)

| | | Example | | | | | | |
|---|---|---|---|---|---|---|---|---|
| | | 1 | 2 | 3 | 4 | 5 | 6 | 7 |
| Antioxidant (parts by weight) | Irganox 259 | - | - | 0.1 | - | - | - | - |
| | Irganox 1010 | 0.1 | 0.1 | - | 0.1 | 0.1 | 0.1 | 0.1 |
| | ADK Stab PEP-36 | 0.01 | 0.01 | 0.01 | - | 0.01 | 0.01 | 0.01 |
| | Irgafos 168 | - | 0.05 | 0.05 | 0.05 | - | 0.05 | 0.05 |
| | ADK Stab PEP-4C | - | - | - | 0.01 | - | - | - |
| Acidic compound (parts by weight) | Butyl p-toluenesulfonate | 0.0006 | 0.0006 | 0.0006 | 0.0006 | 0.0006 | 0.0006 | 1.0006 |
| | | | | | | | | |
| Reduced viscosity of extruded pellets | | 0.571 | 0.568 | 0.570 | 0.573 | 0.570 | 0.568 | 0.585 |
| End group configuration | Proportion of double-bond ends (%) | 5.4 | 3.9 | 5.1 | 4.8 | 4.9 | 5.1 | 2.0 |
| | Proportion of phenyl-group ends (%) | 65 | 61 | 49 | 75 | 60 | 71 | 69 |
| Evaluation of Injection molding | Ordinary-molding ΔYI | -1.0 | -1.4 | -1.3 | -1.8 | -0.9 | -1.5 | -0.6 |
| | Molding residence ΔYI | 0.3 | 0.1 | 0.1 | 0.2 | 0.3 | 0.1 | 0.3 |
| Hydrolytic resistance | Retention of reduced viscosity (%) | 95 | 95 | 90 | 88 | 95 | 95 | 95 |

The results given in Table 1 show that the polycarbonate resin compositions obtained using the polycarbonate resins obtained by the polycondensation of isosorbide (ISB) and tricyclodecanedimethanol (TCDDM) with diphenyl carbonate (DPC) and containing end groups represented by structural formula (2) described above (double-bond ends) in an amount of 7% or less (Example 1 to Example 7) showed small values of ordinary-molding ΔYI and molding residence ΔYI in the evaluation of injection molding. It can hence be seen that these polycarbonate resin compositions are materials which are reduced in appearance discoloration and have excellent transparency.

(COMPARATIVE EXAMPLE 1 TO COMPARATIVE EXAMPLE 8)

The production described above for producing heterocycle-containing polycarbonate resin A-1, heterocycle-containing polycarbonate resin B-1, and heterocycle-containing polycarbonate resin C-1 was conducted under changed production conditions to obtain heterocycle-containing polycarbonate resin A-2, heterocycle-containing polycarbonate resin B-2, and heterocycle-containing polycarbonate resin C-2 (respectively referred to as "PC resin A-2", "PC resin B-2", and "PC resin C-2"), respectively, which each had a proportion of double-bond ends exceeding 7%.

Specifically, in Comparative Example 2, Comparative Example 5, and Comparative Example 8, the same procedure as for the production of PC resin A-1, PC resin B-1, and PC resin C-1, respectively, was conducted, except that the heating-vessel temperature in the second stage was elevated to 280°C. Thereafter, using the twin-screw extruder, the compounding ingredients shown in Table 2 were added to each resin and the resultant mixture was kneaded.

In Comparative Example 3, the same procedure as for the production of PC resin A-1 was conducted, except that the amount of diphenyl carbonate (DPC) was reduced to 115,688 parts by weight and that the heating-vessel temperature in the second stage was elevated to 280°C. Thereafter, using the twin-screw extruder, the compounding ingredients shown in Table 2 were added to the resin and the resultant mixture was kneaded.

In Comparative Example 6, the same procedure as for the production of PC resin B-1 was conducted, except that the amount of diphenyl carbonate (DPC) was reduced to 107,102 parts by weight and that the heating-vessel temperature in the second stage was elevated to 280°C. Thereafter, using the twin-screw extruder, the compounding ingredients shown in Table 2 were added to the resin and the resultant mixture was kneaded. The results are shown in Table 2.

[Table 2]

| | | Comparative Example | | | | | | | |
|---|---|---|---|---|---|---|---|---|---|
| | | 1 | 2 | 3 | 4 | 5 | 6 | 7 | 8 |
| PC resin A-2 (parts by weight) | (monomers) ISB+TCDDM | 100.0000 | 99.8394 | 99.8394 | - | - | - | - | - |
| PC resin B-2 (parts by weight) | (monomer) ISB | - | - | - | 100.0000 | 99.8394 | 99.8394 | - | - |
| PC resin C-2 (parts by weight) | (monomers) ISB+CHDM | - | - | - | - | - | - | 100 | 99.8394 |
| Antioxidant (parts by weight) | Irganox 1010 | - | 0.1 | 0.1 | - | 0.1 | 0.1 | - | 0.1 |
| | ADK Stab PEP-36 | - | 0.01 | 0.01 | - | 0.01 | 0.01 | - | 0.01 |
| | Irgafos 168 | - | 0.05 | 0.05 | - | 0.05 | 0.05 | - | 0.05 |
| Acidic compound (parts by weight) | butyl p-toluenesulfonate | - | 0.0006 | 0.0006 | - | 0.0006 | 0.0006 | - | 0.0006 |
| | | | | | | | | | |
| Reduced viscosity | of extruded pellets | 0.568 | 0.570 | 0.569 | 0.572 | 0.569 | 0.573 | 0.579 | 0.581 |
| End group configuration | Proportion of double-bond ends (%) | 9.4 | 8.9 | 9.2 | 8.8 | 9.0 | 9.3 | 8.4 | 8.5 |
| | Proportion of phenyl-group ends (%) | 64 | 61 | 11 | 62 | 57 | 12 | 70 | 69 |
| Evaluation of injection molding | Ordinary-molding ΔYI | 0.0 | -0.6 | 0.4 | 0.0 | -0.7 | 0.3 | 0.0 | -0.7 |
| | Molding residence ΔYI | 2.3 | 1.8 | 2.7 | 1.9 | 1.7 | 2.6 | 1.9 | 1.7 |
| Hydrolytic resistance | Retention of reduced viscosity (%) | 96 | 95 | 94 | 95 | 95 | 94 | 97 | 94 |

The results given in Table 2 show that the polycarbonate resin compositions obtained using the polycarbonate resins having an excessively high proportion of double-bond ends (Comparative Example 1 to Comparative Example 8) showed a large value of molding residence ΔYI in the evaluation of injection molding. It can hence be seen that these polycarbonate resin compositions are materials which suffer considerable appearance discoloration and have impaired transparency.

(EXAMPLE 8 TO EXAMPLE 14)

Polycarbonate resin compositions prepared using heterocycle-containing polycarbonate resin A-1 (PC resin A-1), heterocycle-containing polycarbonate resin B-1 (PC resin B-1), and the antioxidants and acidic compound described above, according to the formulations shown in Table 3, were subjected to the various kinds of evaluation. The results are shown in Table 3.

[Table 3]

| | | Example | | | | | | |
|---|---|---|---|---|---|---|---|---|
| | | 8 | 9 | 10 | **11** | 12 | 13 | 14 |
| PC resin A-1 (parts by weight) | (monomers) ISB+TCDDM | 99.8894 | 99.8394 | 99.8394 | 99.8394 | - | 100.0000 | - |
| PC resin B-1 weight) | (monomer) ISB | - | - | - | - | 99.8394 | - | 100.0000 |
| (parts by Antioxidant (parts by weight) | Irganox 259 | - | - | 0.1 | - | | - | - |
| | Irganox 1010 | 0.1000 | 0.1000 | - | 0.1000 | - 0.1000 | - | - |
| | ADK Stab PEP-36 | 0.0100 | 0.0100 | 0.0100 | - | 0.0100 | - | - |
| | Irgafos 168 | - | 0.0500 | 0.0500 | 0.0500 | 0.0500 | - | - |
| | ADK Stab PEP-4C | - | - | - | 0.01 | - | - | - |
| Acidic compound (parts by weight) | butyl p-toluenesulfonate | 0.0006 | 0.0006 | 0.0006 | 0.0006 | 0.0006 | - | - |
| | | | | | | | | |
| Reduced viscosity of extruded pelets | | 0.570 | 0.568 | 0.577 | 0.571 | 0.570 | 0.576 | 0.570 |
| Residual substances in polymer | Amount of residual carbonic diester (ppm) | 10 | 20 | 10 | 15 | 10 | 20 | 10 |
| | Residual monomer amount (ppm) | 10 | 10 | 10 | 10 | 10 | 10 | 10 |
| | Residual phenol amount (ppm) | 220 | 200 | 190 | 230 | 190 | 210 | 200 |
| Polymer ends | Proportion of double-bond ends (%) | 5.4 | 3.9 | 5.1 | 4.8 | 4.9 | 5.6 | 5.8 |
| Evaluation of injection molding | Ordinary-molding ΔYI | -1.4 | -1.7 | -1.1 | -1.9 | -1.9 | 0.0 | 0.0 |
| | Molding residence ΔYI | 0.0 | 0.1 | 0.1 | 0.1 | 0.2 | 2.6 | 2.0 |
| | Percentage appearance defective (%) | 1 | 2 | 1 | 1 | 1 | 2 | 1 |

(continued)

| | | | | | | | | |
|---|---|---|---|---|---|---|---|---|
| Reduced viscosity of extruded pellets | | 0.570 | 0.568 | 0.577 | 0.571 | 0.570 | 0.576 | 0.570 |
| Evaluation of extruded film | Amount of roll deposits | A | A | A | A | A | A | A |
| | Number of defects | A | A | A | A | A | A | A |
| | Photoelastic coefficient ($10^{-12}Pa^{-1}$) | 9 | 9 | 9 | 9 | 14 | 9 | 14 |
| Hydrolytic resistance | Retention of reduced viscosity (%) | 95 | 95 | 90 | 88 | 95 | 95 | 95 |

The results given in Table 3 show that the polycarbonate resins which contain constituent units derived from ISB or TCDDM and have a carbonic diester content of 0.1 ppm to 60 ppm, a residual phenol amount of 700 ppm or less, and a residual monomer (ISB or TCDDM) amount of 60 ppm or less (Example 8 to Example 14) have excellent heat resistance and transparency.

(EXAMPLE 15) (for reference)

In Example 15, the same procedure as for the production of heterocycle-containing polycarbonate resin A-1 in Example 1 was conducted, except that the amount of the diphenyl carbonate to be used was changed to 120,225 parts by weight and that in the twin-screw extruder, the water injection was omitted and only the volatile removal under vacuum was conducted. As a result, polycarbonate resin A-3 (PC resin A-3) was obtained, the resin having a residual carbonic diester content exceeding 60 ppm and a residual phenol amount exceeding 700 ppm.

(EXAMPLE 16) (for reference)

In Example 16, the same procedure as for the production of heterocycle-containing polycarbonate resin A-1 in Example 1 was conducted, except that the amount of the diphenyl carbonate to be used was changed to 115,688 parts by weight and that in the twin-screw extruder, the water injection was omitted and only the volatile removal under vacuum was conducted. As a result, polycarbonate resin A-4 (PC resin A-4) was obtained, the resin having an isosorbide content exceeding 60 ppm and a residual phenol amount exceeding 700 ppm.

(EXAMPLE 17) (for reference)

In Example 17, the same procedure as in Example 1 was conducted, except that in the twin-screw extruder, the water injection was omitted and only the volatile removal under vacuum was conducted. As a result, polycarbonate resin A-5 (PC resin A-5) was obtained, the resin having a residual phenol amount exceeding 700 ppm.

(COMPARATIVE EXAMPLE 9)

In Comparative Example 9, the same procedure as for the production of heterocycle-containing polycarbonate resin A-1 in Example 1 was conducted, except that the amount of the diphenyl carbonate to be used was changed to 115,688 parts by weight, that the heating-vessel temperature in the second stage was elevated to 280°C, and that in the twin-screw extruder in the subsequent step, the water injection was omitted and only the volatile removal under vacuum was conducted. As a result, polycarbonate resin A-6 (PC resin A-6) was obtained, the resin having an isosorbide content exceeding 60 ppm and a residual phenol amount exceeding 700 ppm and having a proportion of double-bond ends exceeding 7%.

(COMPARATIVE EXAMPLE 10 TO COMPARATIVE EXAMPLE 12)

(Production of Polycarbonate Resin D Containing No Heterocycle)

Into a reaction vessel were introduced 91,200 parts by weight of bisphenol A, 89,024 parts by weight of diphenyl carbonate, and $4.0 \times 10^{-2}$ parts by weight of cesium carbonate as a catalyst. In a nitrogen atmosphere, a step for the first stage of reaction was conducted in which the heating-vessel temperature was elevated to 150°C to dissolve the starting

materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 250°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.

In the twin-screw extruder, the additives were continuously added so as to result in the composition shown in Table 4. Simultaneously therewith, in each vent part, low-molecular substances including phenol were volatilized with water injection and removed. Thereafter, using a pelletizer, pellets of polycarbonate resin D-1 (referred to as "PC resin D-1"), which contained no heterocycle, were obtained.

In Comparative Example 12, the same procedure as for the production of polycarbonate resin D-1 in Comparative Example 10 was conducted, except that in the twin-screw extruder, the water injection was omitted and only the volatile removal under vacuum was conducted. As a result, polycarbonate resin D-2 was obtained (referred to as "PC resin D-2"). The results are shown in Table 4.

[Table 4]

| | | Example | | | Comparative Example | | | |
|---|---|---|---|---|---|---|---|---|
| | | 15 | 16 | 17 | 9 | 10 | 11 | 12 |
| PC resin A-2 (parts by weight) | (monomers) ISB+TCDDM | 99.8394 | - | - | - | - | - | - |
| PC resin A-3 (parts by weight) | (monomers) ISB+TCDDM | - | 99.8394 | - | - | - | - | - |
| PC resin A-4 (parts by weight) | (monomers) ISB+TCDDM | - | - | 99.8394 | - | - | - | - |
| PC resin A-5 (parts by weight) | (monomers) ISB+TCDDM | - | - | - | 99.8394 | - | - | - |
| PC resin D-1 (parts by weight) | (monomer) BPA | - | - | - | - | 100.0000 | 99.8394 | - |
| PC resin D-2 (parts by weight) | (monomer) BPA | - | - | - | - | - | - | 100.0000 |
| Antioxidant (parts by weight) | Irganox 1010 | 0.1000 | 0.1000 | 0.1000 | 0.1000 | - | 0.1000 | - |
| | ADK Stab PEP-36 | 0.0100 | 0.0100 | 0.0100 | 0.0100 | - | 0.0100 | - |
| | Irgafos 168 | 0.0500 | 0.0500 | 0.0500 | 0.0500 | - | 0.0500 | - |
| Acidic compound (parts by weight) | butyl p-toluenesulfonate | 0.0006 | 0.0006 | 0.0006 | 0.0006 | - | 0.0006 | - |
| | | | | | | | | |

(continued)

| | | | | | | | | |
|---|---|---|---|---|---|---|---|---|
| Reduced viscosity of extruded pellets | | 0.534 | 0.525 | 0.574 | 0.569 | 0.556 | 0.557 | 0.545 |
| Residual substances in polymer | Amount of residual carbonic diester (ppm) | 120 | 10 | 10 | 20 | 10 | 20 | 140 |
| | Residual monomer amount (ppm) | 10 | 80 | 10 | 90 | 10 | 10 | 10 |
| | Residual phenol amount (ppm) | 1100 | 950 | *1200* | 950 | 180 | 220 | 850 |
| Polymer ends | Proportion of double-bond ends (%) | 5.2 | 5.1 | 5.2 | 9.2 | - | - | - |
| Evaluation of injection molding | Ordinary-molding ΔYI | -0.1 | -0.5 | -0.6 | 0.4 | 0.0 | -1.2 | 0.0 |
| | Molding residence ΔYI | 0.6 | 4.2 | 3.4 | 2.7 | 1.1 | 0.7 | 1.0 |
| | Percentage appearance defective (%) | 24 | 11 | 19 | 9 | 1 | 0 | 8 |
| Evaluation of extruded film | Amount of roll deposits | C | C | C | C | A | A | C |
| | Number of defects | B | B | B | B | A | A | B |
| | Photoelastic coefficient ($10^{-12}Pa^{-1}$) | 9 | 9 | 9 | 9 | 79 | 79 | 79 |
| Hydrolytic resistance | Retention of reduced viscosity (%) | 95 | 94 | 96 | 94 | 95 | 95 | 96 |

It can be seen from the results given in Table 3 and Table 4 that in the case where the proportion of double-bond ends exceeds 7% (Comparative Example 9), the resin is inferior in discoloration by molding, percentage appearance defective, the amount of roll deposits, and the number of defects.

It can also be seen that the polycarbonate resins containing no constituent units derived from ISB or TCDDM (Comparative Example 10 to Comparative Example 12) have a high photoelastic coefficient. Only the polycarbonate resins of the invention have a low photoelastic coefficient and give satisfactory results with respect to percentage appearance defective, the amount of roll deposits, and the number of defects.

Furthermore, a comparison between Examples shows that the polycarbonate resins which contain constituent units derived from ISB or TCDDM and which have a residual phenol amount exceeding 700 ppm (Example 15 to Example 17) are inferior in percentage appearance defective, the amount of roll deposits, and the number of defects, even when the resins have a residual monomer (ISB or TCDDM) amount of 60 ppm or less or a carbonic diester content of 0.1 ppm to 60 ppm.

(EXAMPLE 18 TO EXAMPLE 21)

Polycarbonate resin compositions prepared using heterocycle-containing polycarbonate resin A-1 (PC resin A-1), antioxidants, and the release agents shown below, according to the formulations shown in Table 5, were subjected to the various kinds of evaluation. The results are shown in Table 5.

(EXAMPLE 22 TO EXAMPLE 24) (Examples 22 to 24 for reference)

In Example 22, use was made of heterocycle-containing polycarbonate resin A-7 (referred to as "PC resin A-7") obtained by conducting only the volatile removal under vacuum in the twin-screw extruder, without conducting water injection, when heterocycle-containing polycarbonate resin A-1 (PC resin A-1) described above was produced.

In Example 23, use was made of heterocycle-containing polycarbonate resin A-8 (referred to as "PC resin A-8")

obtained in the same manner as for the production of heterocycle-containing polycarbonate resin A-1 (PC resin A-1) described above, except that the amount of the diphenyl carbonate to be used for producing the PC resin A-1 was changed to 115,688 parts by weight.

In Example 24, use was made of heterocycle-containing polycarbonate resin A-9 (referred to as "PC resin A-9") obtained in the same manner as for the production of heterocycle-containing polycarbonate resin A-1 (PC resin A-1) described above, except that the heating-vessel temperature in the second stage in producing the PC resin A-1 was changed to 280°C.

Polycarbonate resin compositions prepared using PC resin A-1, PC resin A-7, PC resin A-8, PC resin A-9, antioxidants, and the release agents shown below, according to the formulations shown in Table 5, were subjected to the various kinds of evaluation. The results are shown in Table 5.

(Release Agents)

NAA-180: stearic acid (manufactured by Nippon Oil & Fats Co., Ltd.)
Golden Bland Powder: bleached beeswax (manufactured by Miki Chemical Industry Co., Ltd.)
Paraffin Wax 155: paraffin wax (manufactured by Nippon Seiro Co., Ltd.)

[Table 5]

| | | Example | | | | | | |
|---|---|---|---|---|---|---|---|---|
| | | 18 | 19 | 20 | 21 | 22 | 23 | 24 |
| Production conditions | Heating-vessel temperature in second stage (°C) | 240 | 240 | 240 | 240 | 240 | 240 | 280 |
| | Volatile removal with water injection | conducted | conducted | conducted | conducted | not conducted | conducted | conducted |
| PC resin (parts by weight) | A-1 | 99.8394 | 99.8394 | 99.8394 | 99.8394 | - | - | - |
| | A-7 | - | - | - | - | 99.8394 | - | - |
| | A-8 | - | - | - | - | - | 99.8394 | - |
| | A-9 | - | - | - | - | - | - | 99.8394 |
| Antioxidant (parts by weight) | Irganox 1010 ADK Stab PEP-36 | 0.1 | 0.1 | 0.1 | 0.1 | 0.1 | 0.1 | 0.1 |
| | | 0.01 | 0.01 | 0.01 | 0.01 | 0.01 | 0.01 | 0.01 |
| | Irgafos 168 | 0.05 | 0.05 | 0.05 | 0.05 | 0.05 | 0.05 | 0.05 |
| Release agent (parts by weight) | NAA-180 | 0.3 | - | - | - | - | - | - |
| | Golden Bland Powder | - | 0.3 | - | - | - | - | - |
| | Paraffin Wax 155 | - | - | 0.3 | - | - | - | - |
| | | | | | | | | |
| End group configuration | Proportion of double-bond ends (%) | 3.9 | 3.9 | 3.9 | 3.9 | 4.0 | 4.2 | 8.9 |
| | Proportion of phenyl-group ends (%) | 59 | 59 | 59 | 59 | 60 | 11 | 61 |
| Residual substances | Amount of residual carbonic diester (ppm) | 20 | 20 | 20 | 20 | 120 | 10 | 20 |
| | Residual monomer amount (ppm) | 10 | 10 | 10 | 10 | 30 | 100 | 10 |
| | Residual phenol amount (ppm) | 250 | 250 | 250 | 250 | 1900 | 240 | 190 |
| Evaluation of injection molding | ΔYI | 0 | 0.1 | 0.2 | -0.1 | 0.3 | 1.8 | 2.2 |
| | Release failure | not occurred | not occurred | not occurred | occurred | not occurred | not occurred | not occurred |
| | Amount of mold deposits | small | small | small | small | large | large | small |

It can be seen from the results given in Table 5 that, as apparent from a comparison between the Examples, the resin compositions in which the resins have been obtained by the polycondensation of isosorbide (ISB) and tricyclodecanedimethanol (TCDDM) with diphenyl carbonate (DPC) and contain end groups represented by structural formula (2) described above (double-bond ends) in an amount of 7% or less have a small value of ΔYI and are excellent materials.
A comparison between Examples shows that the polycarbonate resin compositions obtained using polycarbonate resins having a proportion of phenyl-group ends of 20% or higher (Example 18 to Example 22) have a lower value of ΔYI and are excellent materials. It can be further seen that the polycarbonate resin compositions containing a release agent (Example 18 to Example 20) show satisfactory releasability, are reduced in the amount of mold deposits, and are excellent materials.

<Polycarbonate Resin Compositions Containing Inorganic Filler>

<Preparation of Polycarbonate Resin>

(Heterocycle-Containing Polycarbonate Resin A-10)

Into a reaction vessel were introduced 54,220 parts by weight of the distilled isosorbide (ISB), 31,260 parts by weight of tricyclodecanedimethanol (hereinafter abbreviated to "TCDDM"), 117,957 parts by weight of diphenyl carbonate (DPC), and $2.2 \times 10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.
Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.
The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced. The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.
In the twin-screw extruder, the additives were continuously added so as to result in the composition shown in Table 6. Simultaneously therewith, in each vent part, low-molecular substances including phenol were volatilized with water injection and removed. Thereafter, the resin was pelletized with a pelletizer to obtain heterocycle-containing polycarbonate resin A-10 (referred to as "PC resin A-10"), which had an isosorbide (ISB)/TCDDM ratio of 70/30 (mol% ratio).

<Evaluation of Material Properties of Polycarbonate Resin Compositions>

(Injection Molding)

Polycarbonate resin pellets prepared through kneading with the twin-screw extruder were predried at 80°C for 4 hours. Subsequently, the pellets and various additives were introduced into an injection molding machine (Type J75EII, manufactured by The Japan Steel Works, Ltd.) and injection-molded under the conditions of a cylinder temperature of 230°C, a molding cycle of 45 seconds, and a mold temperature of 60°C to produce various test pieces.

(Flexural Modulus)

The test pieces prepared with the injection molding machine were subjected to a three-point bending test by the bending test method in accordance with ISO 178.

(Mold Deposits)

Each polycarbonate resin composition was subjected to 100-shot molding under those injection molding conditions to produce flat plates having a length of 60 mm, width of 60 mm, and thickness of 3 mm. Whether a mold release failure occurred during the molding or not and the amount of deposits present on the front mold after the molding were visually examined.

(Molding Residence ΔYI)

Each polycarbonate resin composition was subjected to 10-shot molding to produce flat plates having a length of 60 mm, width of 60 mm, and thickness of 3 mm under the same injection molding conditions as described above, except that the molding cycle was changed to 300 seconds. Thus, test pieces were prepared.
Subsequently, each test piece prepared was examined for yellow index (YI) value with a spectral color difference meter (SE-2000, manufactured by Nippon Denshoku Kogyo K.K.) by the illuminant-C reflection method (300-second-cycle molded-article YI).
From this 300-second-cycle molded-article YI and from the yellow index (YI) value of the test pieces obtained by injection molding using a molding cycle of 45 seconds (45-second-cycle molded-article YI), a molding residence ΔYI was calculated in accordance with the following equation.

Molding residence ΔYI = (300-second-cycle molded-article YI)-(45-second-cycle molded-article YI)

(EXAMPLE 25 TO EXAMPLE 28) (Examples 27 and 28 for reference)

In Example 27, use was made of heterocycle-containing polycarbonate resin A-11 (referred to as PC resin A-11) obtained in the same manner as for the production of PC resin A-10 described above, except that in the twin-screw extruder, the water injection was omitted and only the volatile removal under vacuum was conducted.
In Example 28, use was made of heterocycle-containing polycarbonate resin A-12 (referred to as PC resin A-12) obtained in the same manner as for the production of PC resin A-10, except that the amount of diphenyl carbonate was changed to 115,688 parts by weight.
Polycarbonate resin compositions prepared using heterocycle-containing polycarbonate resin A-10 (PC resin A-10), PC resin A-11, PC resin A-12, the antioxidants shown below, and the inorganic fillers shown below, according to the formulations shown in Table 6, were subjected to the various kinds of evaluation. The results are shown in Table 6.

(COMPARATIVE EXAMPLE 13 AND COMPARATIVE EXAMPLE 14)

In Comparative Example 14, use was made of heterocycle-containing polycarbonate resin A-13 (referred to as PC resin A-13) obtained in the same manner as for the production of PC resin A-10, except that the temperature of the heating vessel in the second stage was changed to 280°C.
Polycarbonate resin compositions prepared using the heterocycle-containing polycarbonate resin A-10 (PC resin A-10) and PC resin A-13 described above, the antioxidants shown below, and the inorganic fillers shown below, according to the formulations shown in Table 6, were subjected to various kinds of evaluation. The results are shown in Table 6.

(Antioxidants)

(1) Irganox 1010: pentaerythrityl tetrakis{3-(3,5-di-t-butyl-4-hydroxyphenyl)propionate (manufactured by Ciba Specialty Chemicals Co.)
(2) ADK Stab PEP-36: bis(2,6-t-butyl-4-methylphenyl)pentaerythrityl diphosphite) (manufactured by Adeka Corp.)
(3) Irgafos 168: tris(2,4-di-tert-butylphenyl) phosphite (manufactured by Ciba Specialty Chemicals Co.)

(Inorganic Fillers)

(1) Glass fibers: glass strands ECS03T-571 (manufactured by Nippon Electric Glass Co., Ltd.)
(2) Carbon fibers: Pyrofil Chopped Fiber TR06U (manufactured by Mitsubishi Rayon Co., Ltd.)

[Table 6]

| | | Example | | | | Comparative Example | |
|---|---|---|---|---|---|---|---|
| | | 25 | 26 | 27 | 28 | 13 | 14 |
| Production conditions | Heating-vessel temperature in second stage (°C) | 240 | 240 | 240 | 240 | 240 | 280 |
| | Volatile removal with water injection | conducted | conducted | not conducted | conducted | conducted | conducted |
| Polycarbonate resin (parts by weight) | PC resin A-10 | 99.8394 | 99.8394 | - | - | 99.8394 | - |
| | PC resin A-11 | - | - | 99.8394 | - | - | - |
| | PC resin A-12 | - | - | - | 99.8394 | - | - |
| | PC resin A-13 | - | - | - | - | - | 99.8394 |
| Antioxidant (parts by weight) | Irganox 1010 | 0.1 | 0.1 | 0.1 | 0.1 | 0.1 | 0.1 |
| | ADK Stab PEP-36 | 0.01 | 0.01 | 0.01 | 0.01 | 0.01 | 0.01 |
| | Irgafos 168 | 0.05 | 0.05 | 0.05 | 0.05 | 0.05 | 0.05 |
| Inorganic filler (parts by weight) | Glass fibers | 20 | - | 20 | 20 | - | 20 |
| | Carbon fibers | - | 20 | - | - | - | - |
| | | | | | | | |
| End group configuration | Proportion of double-bond ends (%) | 3.9 | 3.9 | 4.0 | 4.2 | 3.9 | 8.9 |
| | Proportion of phenyl-group ends (%) | 59 | 59 | 60 | 11 | 59 | 61 |
| Residual substances | Amount of residual carbonic diester (ppm) | 20 | 20 | 120 | 10 | 20 | 20 |
| | Residual monomer amount (ppm) | 10 | 10 | 30 | 100 | 10 | 10 |
| | Residual phenol amount (ppm) | 250 | 250 | 1900 | 240 | 250 | 190 |

(continued)

| | | Example | | | | Comparative Example | |
|---|---|---|---|---|---|---|---|
| | | 25 | 26 | 27 | 28 | 13 | 14 |
| Evaluation of injection molding | Flexural modulus (MPa) | 6000 | 12600 | 6000 | 6000 | 2900 | 6000 |
| | Molding residence ΔYI | 0.2 | 0.0 | 0.5 | 3.6 | 0.1 | 4.8 |
| | Amount of mold deposits | small | small | large | large | small | small |

It can be seen from the results given in Table 6 that the polycarbonate resin compositions in each of which the polycarbonate resin was obtained by the polycondensation of isosorbide (ISB) and tricyclodecanedimethanol (TCDDM) with diphenyl carbonate (DPC) and contains end groups represented by structural formula (2) described above (double-bond ends) in an amount of 7% or less and which contain an inorganic filler in an amount of 1 part by weight to 100 parts by weight are excellent compositions which have a high flexural modulus and which, despite this, have a small value of molding residence ΔYI and suffer little discoloration. In particular, a comparison among the Examples shows that the polycarbonate resin compositions containing a polycarbonate resin having a proportion of phenyl-group ends of 20% or higher (Examples 25 to 27) have a low value of molding residence ΔYI, and that these compositions in which the resin further has a residual carbonic ester content of 60 ppm or less show a reduced amount of mold deposits and are excellent materials.

<Polycarbonate Resin Compositions Containing Flame Retardant>

<Preparation of Polycarbonate Resin>

(Heterocycle-Containing Polycarbonate Resin A-14)

Into a reaction vessel were introduced 54,220 parts by weight of the distilled isosorbide (ISB), 31,260 parts by weight of tricyclodecanedimethanol (hereinafter abbreviated to "TCDDM"), 117,957 parts by weight of diphenyl carbonate (DPC), and $2.2\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was continuously fed from the outlet of the polymerizer to a twin-screw extruder equipped with three vent holes and a water injection system.

In the twin-screw extruder, the additives were continuously added so as to result in the composition shown in Table 7. Simultaneously therewith, in each vent part, low-molecular substances including phenol were volatilized with water injection and removed. Thereafter, the resin was pelletized with a pelletizer to obtain heterocycle-containing polycarbonate resin A-14 (referred to as "PC resin A-14"), which had an isosorbide (ISB)/TCDDM ratio of 70/30 (mol% ratio).

<Evaluation of Material Properties of Polycarbonate Resin Compositions>

(Injection Molding)

Polycarbonate resin pellets prepared through kneading with the twin-screw extruder were predried at 80°C for 4

hours. Subsequently, the pellets and various additives were introduced into an injection molding machine (Type J75EII, manufactured by The Japan Steel Works, Ltd.) and injection-molded under the conditions of a cylinder temperature of 230°C, a molding cycle of 45 seconds, and a mold temperature of 60°C to produce various test pieces.

(Flammability)

Pellets prepared through kneading with the twin-screw extruder were predried at 80°C for 4 hours. The predried pellets were molded into burning test pieces having a thickness of 1.5 mm according to UL-94 using injection molding machine Type J75EII, manufactured by the Japan Steel Works, Ltd., under the conditions of a cylinder temperature of 230°C, a molding cycle of 45 seconds, and a mold temperature of 60°C. The test pieces obtained were subjected to a vertical burning test according to UL-94.

(EXAMPLES 29 TO 31) (Example 31 for reference)

In Example 31, use was made of heterocycle-containing polycarbonate resin A-15 (referred to as PC resin A-15) obtained in the same manner as for the production of PC resin A-14 described above, except that in the twin-screw extruder, the water injection was omitted and only the volatile removal under vacuum was conducted.
Polycarbonate resin compositions prepared using heterocycle-containing polycarbonate resin A-14 (PC resin A-14), PC resin A-15, the antioxidants shown below, and the flame retardants shown below, according to the formulations shown in Table 7, were subjected to the various kinds of evaluation. The results are shown in Table 7.

(COMPARATIVE EXAMPLES 15 AND 16)

In Comparative Example 16, use was made of heterocycle-containing polycarbonate resin A-16 (referred to as PC resin A-16) obtained in the same manner as for the production of PC resin A-14, except that the temperature of the heating vessel in the second stage was changed to 280°C.
Polycarbonate resin compositions prepared using the heterocycle-containing polycarbonate resin A-14 (PC resin A-14) and PC resin A-16 described above, the antioxidants shown below, and the flame retardants shown below, according to the formulations shown in Table 7, were subjected to various kinds of evaluation. The results are shown in Table 7.

(Antioxidants)

(1) Irganox 1010: pentaerythrityl tetrakis{3-(3,5-di-t-butyl-4-hydroxyphenyl)propionate (manufactured by Ciba Specialty Chemicals Co.)
(2) ADK Stab PEP-36: bis(2,6-t-butyl-4-methylphenyl)pentaerythrityl diphosphite) (manufactured by Adeka Corp.)
(3) Irgafos 168: tris(2,4-di-tert-butylphenyl) phosphite (manufactured by Ciba Specialty Chemicals Co.)

(Flame Retardants)

(1) SPS-100: phosphazene compound (manufactured by Otsuka Chemical Co., Ltd.)
(2) PX-200: aromatic condensed phosphate (manufactured by Daihachi Chemical Industry Co., Ltd.)

[Table 7]

| | | Example | | | Comparative Example | |
|---|---|---|---|---|---|---|
| | | 29 | 30 | 31 | 15 | 16 |
| Production conditions | Heating-vessel temperature in second stage (°C) | 240 | 240 | 240 | 240 | 240 |
| | Volatile removal with water injection | conducted | conducted | not conducted | conducted | conducted |

(continued)

| | | Example | | | Comparative Example | |
|---|---|---|---|---|---|---|
| | | 29 | 30 | 31 | 15 | 16 |
| Polycarbonate resin (parts by weight) | PC resin A-14 | 99.8394 | 99.8394 | - | 99.8394 | - |
| | PC resin A-15 | - | - | 99.8394 | - | - |
| | PC resin A-16 | - | - | - | - | 99.8394 |
| Antioxidant (parts by weight) | Irganox 1010 ADK Stab PEP-36 | 0.1 | 0.1 | 0.1 | 0.1 | 0.1 |
| | | 0.01 | 0.01 | 0.01 | 0.01 | 0.01 |
| | Irgafos 168 | 0.05 | 0.05 | 0.05 | 0.05 | 0.05 |
| Flame retardant (parts by weight) | SPS-100 | 8 | - | 8 | - | 8 |
| | PX-200 | - | 8 | - | - | - |
| | | | | | | |
| End group configuration | Proportion of double-bond ends (%) | 3.9 | 3.9 | 4.0 | 3.9 | 8.9 |
| Residual substances | Amount of residual carbonic diester (ppm) | 20 | 20 | 120 | 20 | 10 |
| | Residual monomer amount (ppm) | 10 | 10 | 30 | 10 | 0 |
| | Residual phenol amount (ppm) | 250 | 250 | 1900 | 250 | 240 |
| Flammability | 1.5 mm(t) | V-2 | V-2 | V-2 | NG | V-2 |
| Evaluation of injection molding | Amount of mold deposits | reference | equal | large | small | equal |
| | Molding residence ΔYI | 6 | 4 | 6 | 1 | 11 |

It can be seen from the results given in Table 7 that the polycarbonate resin compositions each containing a polycarbonate resin which was obtained by the polycondensation of isosorbide (ISB) and tricyclodecanedimethanol (TCDDM) with diphenyl carbonate (DPC) and contains end groups represented by structural formula (2) described above (double-bond ends) in an amount of 7% or less and which has reduced contents of residual substances (Examples 29 to 31) are materials which neither leave a large amount of mold deposits nor have a large value of ΔYI and which have excellent flame retardancy.

Furthermore, it can be seen from a comparison among the Examples that the polycarbonate resin compositions in which the resin has a residual carbonic diester content of 60 ppm or less (Examples 29 and 30) do not leave an increased amount of mold deposits and are superior materials.

<Polycarbonate Resin Compositions Containing Ultraviolet Absorber>

<Preparation of Polycarbonate Resins>

(Production Example 1: Heterocycle-Containing Polycarbonate Resin R-1)

Into a reaction vessel were introduced 54,220 parts by weight of the distilled isosorbide (ISB), 31,260 parts by weight of tricyclodecanedimethanol (hereinafter abbreviated to "TCDDM"), 117,957 parts by weight of diphenyl carbonate (DPC), and $2.2\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need. Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was

conducted in which the heating-vessel temperature was elevated to 240°C over 30 minutes. At the time when 10 minutes had passed since initiation of the heating, the internal pressure of the reaction vessel began to be reduced. The internal pressure thereof was lowered to 0.200 kPa or below over 30 minutes, and the phenol which generated was distilled off. After a given stirring torque had been reached, the reaction was terminated. The resultant polycarbonate resin in a molten state was obtained through the outlet of the polymerizer (PC resin R-1).

(Production Example 2: Heterocycle-Containing Polycarbonate Resin R-2)

Use was made of a polycarbonate resin (PC resin R-2) obtained in the same manner as in Production Example 4, except that the heating-vessel temperature in the second stage in Production Example 1 was changed from 240°C to 280°C.

(Production Example 3: Heterocycle-Containing Polycarbonate Resin R-3)

Use was made of a polycarbonate resin (PC resin R-3) obtained in the same manner as in Production Example 4, except that the amount of DPC in Production Example 1 was changed from 117,957 parts by weight to 115,688 parts by weight and that the heating-vessel temperature in the second stage was changed from 240°C to 280°C as in Production Example 2.

(Production Example 4: Heterocycle-Containing Polycarbonate Resin R-4)

Into a reaction vessel were introduced 73,070 parts by weight of isosorbide (ISB), 109,140 parts by weight of diphenyl carbonate (DPC), and $2.0 \times 10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced. The internal pressure thereof was lowered to 0.200 kPa or below over 30 minutes, and the phenol which generated was distilled off. After a given stirring torque had been reached, the reaction was terminated. The resultant polycarbonate resin (PC resin R-4) in a molten state was taken out through the outlet of the polymerizer and used.

(Production Example 5: Heterocycle-Containing Polycarbonate Resin R-5)

Use was made of a polycarbonate resin (PC resin R-5) obtained in the same manner as in Production Example 4, except that the heating-vessel temperature in the second stage in Production Example 4 was changed from 240°C to 280°C.

(Production Example 6: Heterocycle-Containing Polycarbonate Resin R-6)

Use was made of a polycarbonate resin (PC resin R-6) obtained in the same manner as in Production Example 4, except that the amount of DPC in Production Example 4 was changed from 109,140 parts by weight to 107,102 parts by weight and that the heating-vessel temperature in the second stage was changed from 240°C to 280°C as in Production Example 2.

<Evaluation of Material Properties of Polycarbonate Resin Compositions>

(Injection Molding)

Polycarbonate resin pellets prepared through kneading with the twin-screw extruder were predried at 80°C for 4 hours. Subsequently, the pellets and various additives were introduced into an injection molding machine (Type J75EII, manufactured by The Japan Steel Works, Ltd.) and injection-molded under the conditions of a cylinder temperature of 230°C, a molding cycle of 45 seconds, and a mold temperature of 60°C to produce various test pieces.

(Evaluation of Light Resistance)

Injection molding was conducted at a cylinder temperature of 240°C to prepare sheets of 60 mm × 4 mm (t). The test pieces prepared were examined for yellow index (YI) value with a spectral color difference meter (SE-2000, manufactured by Nippon Denshoku Kogyo K.K.) by the illuminant-C reflection method (initial YI).
Subsequently, Metaring Weathermeter (M6T, manufactured by Suga Test Instruments Co., Ltd.) was used to conduct a 20-hour irradiation treatment of each test piece under the conditions of an irradiance of 1.5 kW/$m^2$, a chamber temperature of 63°C, and a humidity of 50%.
Thereafter, a spectral color difference meter (ZE-2000, manufactured by Nippon Denshoku Kogyo K.K.) was used to measure the value of yellow index (YI), as an index to yellowing, by the illuminant-C transmission method (YI after test). ΔYI = (YI after test)-(initial YI).

(Stability to Residence)

Thirty grams of a polycarbonate resin was placed in a glass tube having a side arm. The atmosphere in the glass tube was replaced with nitrogen, and the glass tube was sealed. This glass tube was immersed in a 250°C oil bath for 8 hours. Thereafter, the polycarbonate resin was examined for reduced viscosity (after-immersion reduced viscosity ($\eta_{red}$)'). Subsequently, a proportion (unit: %) was determined by dividing the after-immersion reduced viscosity ($\eta_{red}$)' by the reduced viscosity of the polycarbonate resin as measured before the immersion ($\eta_{red}$).

(EXAMPLE 32)

Resin R-1 obtained was fed, according to the formulation shown in Table 8, to a twin-screw extruder equipped with three vent holes and a water injection system. In each vent part, low-molecular substances including phenol were volatilized with water injection and removed. Thereafter, the resin was pelletized with a pelletizer to prepare a polycarbonate resin composition. This composition was subjected to the various kinds of evaluation. The results are shown in Table 8.

(EXAMPLE 33 TO EXAMPLE 42) (Example 40 for reference)

Polycarbonate resin compositions were prepared in the same manner as in Example 32, except that the formulation was changed as shown in Table 8. These compositions were subjected to the various kinds of evaluation. The results are shown in Table 8.

(COMPARATIVE EXAMPLE 17 TO COMPARATIVE EXAMPLE 20)

Polycarbonate resin compositions prepared according to the formulations shown in Table 9 were subjected to the various kinds of evaluation. The results are shown in Table 9.
Antioxidants, an acidic compound, and ultraviolet absorbers are shown below.

(Antioxidants)

(1) Irganox 1010: pentaerythrityl tetrakis{3-(3,5-di-t-butyl-4-hydroxyphenyl)propionate (manufactured by Ciba Specialty Chemicals Co.)
(2) ADK Stab PEP-36: bis(2,6-t-butyl-4-methylphenyl)pentaerythrityl diphosphite) (manufactured by Adeka Corp.)
(3) Irgafos 168: tris(2,4-di-tert-butylphenyl) phosphite (manufactured by Ciba Specialty Chemicals Co.)

(Acidic Compound)

pTSB: butyl p-toluenesulfonate (manufactured by Tokyo Kasei Kogyo Co., Ltd.)

(Ultraviolet Absorbers)

(1) UV-1: 2-(4,6-diphenyl-1,3,5-triazin-2-yl)-5-[(hexyl)oxy]phenol (TINUVIN 1577FF, manufactured by Ciba Specialty

Chemicals Co.; molecular weight, 425)
(2) UV-2: 2-ethyl-2'-ethoxyoxalanilide (Hostavin VSU, manufactured by Clariant Japan K.K.)
(3) UV-3: dimethyl (p-methoxybenzylidene)malonate (Hostavin PR-25, manufactured by Clariant Japan K.K.)
(4) UV-4: 2-(2'-hydroxy-5'-t-octylphenyl)benzotriazole (TINUVIN 329, manufactured by Ciba Specialty Chemicals Co.; molecular weight, 323)
(5) UV-5: phenyl salicylate (phenyl salicylate manufactured by API Corp.; molecular weight, 214)
(6) UV-6: ethyl 2-cyano-3,3-diphenylacrylate (Uninul 3035, manufactured by BASF Japan Ltd.; molecular weight, 277)

The ratio of the molar extinction coefficient at a wavelength of 210 nm ($\varepsilon_{210}$) of each of the ultraviolet absorbers used to the maximum molar extinction coefficient thereof in the wavelength range of 250 nm to 350 nm ($\varepsilon_{250\text{-}350}$), ($\varepsilon_{210}/\varepsilon_{250\text{-}350}$), is as follows.

(1) UV-1: ($\varepsilon_{210}/\varepsilon_{250\text{-}350}$) = 0.85
(2) UV-2: ($\varepsilon_{210}/\varepsilon_{250\text{-}350}$) = 1.52
(3) UV-3: ($\varepsilon_{210}/\varepsilon_{250\text{-}350}$) = 0.43
(4) UV-4: ($\varepsilon_{210}/\varepsilon_{250\text{-}350}$) = 1.69
(5) UV-5: ($\varepsilon_{210}/\varepsilon_{250\text{-}350}$) = 4.12
(6) UV-6: ($\varepsilon_{210}/\varepsilon_{250\text{-}350}$) = 1.78

[Table 8]

| | | Example | | | | | | | | | | |
|---|---|---|---|---|---|---|---|---|---|---|---|---|
| | | 32 | 33 | 34 | 35 | 36 | 37 | 38 | 39 | 40 | 41 | 42 |
| Polycarbonate resin (parts by weight) | PC resin R-1 | 100 | 100 | 100 | 100 | 100 | 100 | 100 | 100 | - | - | - |
| | PC resin R-2 | - | - | - | - | - | - | - | - | 100 | - | - |
| | PC resin R-4 | - | - | - | - | - | - | - | - | - | 100 | - |
| Antioxidant (parts by weight) | Irganox 1010 | - | - | - | - | - | - | - | 0.1 | - | - | 100 |
| | ADK Stab PEP-36 | - | - | - | - | - | - | - | - | - | 0.1 | 0.1 |
| | Irgafos 168 | - | - | - | - | - | - | - | 0.01 | - | 0.01 | 0.01 |
| Acidic compound (parts by weight) | butyl p-toluenesulfonate | 0.0006 | 0.0006 | 0.0006 | 0.0006 | 0.0006 | 0.0006 | - | 0.0006 | 0.0006 | 0.0006 | - |
| Ultraviolet absorber (parts by weight) | UV-1 | 0.15 | - | - | - | 0.15 | 0.15 | - | 0.15 | 0.15 | 0.15 | - |
| | UV-2 | - | 0.15 | - | - | - | - | - | - | | - | - |
| | UV-3 | - | - | 0.15 | - | - | - | 0.15 | - | | - | - |
| | UV-4 | - | - | - | 0.15 | - | - | - | - | | - | 0.15 |
| | UV-5 | - | - | - | - | 0.15 | - | - | - | | - | - |
| | UV-6 | - | - | - | - | - | 0.15 | - | - | | - | - |
| | | | | | | | | | | | | |
| Reduced viscosity of extruded pellets | dL/g | 0.548 | 0.552 | 0.558 | 0.561 | 0.547 | 0.564 | 0.55 | 0.567 | 0.559 | 0.578 | 0.569 |
| End group configuration | Proportion of double-bond ends (%) | 5.6 | 5.4 | 4.9 | 6.3 | 6.7 | 6.6 | 5.8 | 5.3 | 8.9 | 4.9 | 5.2 |
| | Proportion of phenyl-group ends (%) | 64 | 65 | 63 | 60 | 58 | 59 | 61 | 65 | 61 | 68 | 65 |
| Evaluation of light resistance | Initial YI | 15.8 | 15 | 14.7 | 16.8 | 24 | 20 | 11.5 | 14.5 | 18.5 | 17.4 | 16.2 |
| | YI after test | 19.4 | 18.2 | 19.1 | 20.8 | 27.6 | 24.1 | 18.3 | 17.1 | 22.2 | 21 | 20.7 |
| | ΔYI | 3.6 | 3.2 | 4.4 | 4 | 3.6 | 4.1 | 6.8 | 3.4 | 3.7 | 3.6 | 4.5 |

(continued)

| | | Example | | | | | | | | | | |
|---|---|---|---|---|---|---|---|---|---|---|---|---|
| | | 32 | 33 | 34 | 35 | 36 | 37 | 38 | 39 | 40 | 41 | 42 |
| Stability to residence | % | 67.2 | 66.2 | 66.7 | 64.7 | 64.2 | 64.5 | 66.9 | 67.6 | 59.4 | 65.9 | 66.1 |

[Table 9]

| | | Comparative Example | | | |
|---|---|---|---|---|---|
| | | 17 | 18 | 19 | 20 |
| Polycarbonate resin (parts by weight) | PC resin R-2 | 100 | - | - | - |
| | PC resin R-3 | - | 100 | - | - |
| | PC resin R-5 | - | - | 100 | - |
| | PC resin R-6 | - | - | - | 100 |
| | | | | | |
| Reduced viscosity of extruded pellets | dL/g | 0.568 | 0.563 | 0.572 | 0.57 |
| End group configuration | Proportion of double-bond ends (%) | 9.4 | 9.2 | 8.9 | 9.2 |
| | Proportion of phenyl-group ends (%) | 64 | 11 | 62 | 13 |
| Evaluation of light resistance | Initial YI | 7.3 | 10.4 | 11.9 | 12.8 |
| | YI after test | 17.8 | 19.8 | 21.2 | 22.9 |
| | ΔYI | 10.5 | 9.4 | 9.3 | 10.1 |
| Stability to residence | % | 58.7 | 58.5 | 57.1 | 56.1 |

It can be seen from the results given in Table 8 and Table 9 that the polycarbonate resin compositions which include a polycarbonate resin obtained by the polycondensation of isosorbide (ISB) and tricyclodecanedimethanol (TCDDM) with diphenyl carbonate (DPC) and having end groups represented by structural formula (2) described above (double-bond ends) and which further include an ultraviolet absorber (Examples 32 to 42) are materials having excellent light resistance and excellent stability to residence.

<Polycarbonate Resin Compositions Containing Thermoplastic Resin>

<Preparation of Polycarbonate Resins>

(Production Example 7: Heterocycle-Containing Polycarbonate Resin R-7)

Into a reaction vessel were introduced 54,220 parts by weight of the distilled isosorbide (ISB), 31,260 parts by weight of tricyclodecanedimethanol (hereinafter abbreviated to "TCDDM"), 117,957 parts by weight of diphenyl carbonate (DPC), and $2.2\times10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need. Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was fed from the outlet of the polymerizer, together with 0.0006 parts by weight of butyl p-toluenesulfonate as an acidic compound per 100 parts by weight of the polycarbonate resin, to a twin-screw extruder equipped with three vent holes and a water injection system. In each vent part, low-molecular substances including phenol were volatilized with water injection and removed. Thereafter, the resin was pelletized with a pelletizer to obtain polycarbonate resin R-7 (hereinafter referred to as "PC resin R-7").

The pellets obtained had a reduced viscosity of 0.571 dL/g, a proportion of double-bond ends to all ends of 5.6%, and a proportion of phenyl-group ends to all ends of 64%.

(Production Example 8: Heterocycle-Containing Polycarbonate Resin R-8)

The same procedure as in Production Example 7 was conducted, except that the heating-vessel temperature in the second step in Production Example 7 was changed from 240°C to 280°C. Thus, polycarbonate resin R-8 (hereinafter

referred to as "PC resin R-8") was obtained. This resin had a reduced viscosity of 0.554 dL/g, a proportion of double-bond ends to all ends of 9.4%, and a proportion of phenyl-group ends to all ends of 63%.

(Production Example 9: Heterocycle-Containing Polycarbonate Resin R-9)

The same procedure as in Production Example 7 was conducted, except that the amount of DPC in Production Example 7 was changed from 117,957 parts by weight to 115,688 parts by weight, that the heating-vessel temperature in the second step was changed from 240°C to 280°C as in Production Example 8, and that pTSB was not added as an acidic compound. Thus, polycarbonate resin R-9 (hereinafter referred to as "PC resin R-9") was obtained. This resin had a reduced viscosity of 0.561 dL/g, a proportion of double-bond ends to all ends of 9.2%, and a proportion of phenyl-group ends to all ends of 10%.

(Production Example 10: Heterocycle-Containing Polycarbonate Resin R-10)

Into a reaction vessel were introduced 73,070 parts by weight of isosorbide (ISB), 109,140 parts by weight of diphenyl carbonate (DPC), and $2.0 \times 10^{-1}$ parts by weight of cesium carbonate as a catalyst. In a nitrogen atmosphere, a step for the first stage of reaction was conducted in which the heating-vessel temperature was elevated to 150°C to dissolve the starting materials (about 15 minutes) while stirring the contents according to need.

Subsequently, the pressure was reduced from ordinary pressure to 13.3 kPa over 40 minutes and the heating-vessel temperature was elevated to 190°C over 40 minutes. During this operation, the phenol which generated was discharged from the reaction vessel.

The whole reaction vessel was held at 190°C for 15 minutes. Thereafter, a step for the second stage was conducted in which the heating-vessel temperature was elevated to 240°C over 30 minutes. At the time when 10 minutes had passed since initiation of the heating, the internal pressure of the reaction vessel began to be reduced.

The internal pressure thereof was lowered to 0.200 kPa or below over 30 minutes, and the phenol which generated was distilled off. After a given stirring torque had been reached, the reaction was terminated. The resultant polycarbonate resin in a molten state was fed from the outlet of the polymerizer, together with 0.0006 parts by weight of pTSB as an acidic compound per 100 parts by weight of the polycarbonate resin, to a twin-screw extruder equipped with three vent holes and a water injection system. In each vent part, low-molecular substances including phenol were volatilized with water injection and removed. Thereafter, the resin was pelletized with a pelletizer to obtain polycarbonate resin R-10 (hereinafter referred to as "PC resin R-10"). This resin had a reduced viscosity of 0.562 dL/g, a proportion of double-bond ends to all ends of 6.3%, and a proportion of phenyl-group ends to all ends of 60%.

(Production Example 11: Heterocycle-Containing Polycarbonate Resin R-11)

The same procedure as in Production Example 10 was conducted, except that the heating-vessel temperature in the second step in Production Example 10 was changed from 240°C to 280°C. Thus, polycarbonate resin R-11 (hereinafter referred to as "PC resin R-11") was obtained. This resin had a reduced viscosity of 0.548 dL/g, a proportion of double-bond ends to all ends of 8.9%, and a proportion of phenyl-group ends to all ends of 58%.

The thermoplastic resins used are as follows.

Poly(butylene terephthalate) resin (PBT) (trade name NOVADURAN 5010, manufactured by Mitsubishi Engineering-Plastics Corp.)
Noncrystalline poly(ethylene terephthalate) resin (PETG) (trade name EASTAR PETG 6763, manufactured by Eastman Chemical Japan, Ltd.)
Bisphenol A polycarbonate (PC) (trade name NOVAREX 7022J, manufactured by Mitsubishi Engineering-Plastics Corp.)
High-density polyethylene (HDPE) (trade name NOVATECH HD HF410, manufactured by Japan Polyethylene Corp.)

<Evaluation of Material Properties of Polycarbonate Resin Compositions>

(Injection Molding)

Polycarbonate resin pellets prepared through kneading with the twin-screw extruder were predried at 80°C for 4 hours. Subsequently, the pellets and various additives were introduced into an injection molding machine (Type J75EII, manufactured by The Japan Steel Works, Ltd.) and injection-molded under the conditions of a cylinder temperature of 230°C, a molding cycle of 45 seconds, and a mold temperature of 60°C to produce various test pieces.

(Color Tone of Sheet (YI))

Pellets obtained in each of the Examples and Comparative Examples were injection-molded with an injection molding machine (Type J75EII, manufactured by the Japan Steel Works, Ltd.) under the conditions of a cylinder temperature of 230°C and a mold temperature of 90°C to obtain sheets of 60 mm × 4 mm (t). The sheets obtained were examined for yellow index (YI) value as an index to yellowing using a spectral color difference meter (ZE-2000, manufactured by Nippon Denshoku Kogyo K.K.) by the illuminant-C reflection method.

(Stability to Residence)

Thirty grams of a resin was placed in a glass tube having a side arm. The atmosphere in the glass tube was replaced with nitrogen. Thereafter, the glass tube was sealed and immersed in 250°C oil bath for 8 hours. The reduced viscosity measured after the immersion was divided by the reduced viscosity measured before the immersion.

(EXAMPLE 43 TO EXAMPLE 46)

According to each of the formulations shown in Table 10, the polycarbonate resin and the thermoplastic resin were extruded using a vented twin-screw kneading machine (KZW-15-30MG, manufactured by Technovel Corp.) under the conditions of a cylinder temperature of 230°C, a screw rotation speed of 200 rpm, and an ejection rate of 1 kg/h to obtain pellets. The pellets thus obtained were examined for sheet color tone and stability to residence in accordance with the evaluation methods described above. The results are shown in Table 10.

(COMPARATIVE EXAMPLE 21 TO COMPARATIVE EXAMPLE 25)

According to the formulations shown in Table 11, kneading was conducted in the same manner as in Example 43 to obtain pellets. The results of the evaluation are shown in Table 11.

[Table 10]

| | | Example | | | |
|---|---|---|---|---|---|
| | | 43 | 44 | 45 | 46 |
| Polycarbonate resin (parts by weight) | PC resin R-7 | 70 | - | 80 | 90 |
| | PC resin R-10 | - | 70 | - | - |
| Thermoplastic resin (parts by weight) | PBT | 30 | - | - | - |
| | PETG | - | 40 | - | - |
| | PC | - | - | 20 | - |
| | HDPE | - | - | - | 10 |
| | | | | | |
| Color tone of sheet (YI) | | 25 | 19 | - | 29 |
| Stability to residence (%) | | 65 | 71.2 | 68.2 | - |

[Table 11]

| | | Comparative Example | | | | |
|---|---|---|---|---|---|---|
| | | 21 | 22 | 23 | 24 | 25 |
| Polycarbonate resin (parts by weight) | PC resin R-8 | 70 | - | - | - | - |
| | PC resin R-9 | - | 70 | - | 80 | 90 |
| | PC resin R-11 | - | - | 60 | - | - |

(continued)

| | | Comparative Example | | | | |
|---|---|---|---|---|---|---|
| | | 21 | 22 | 23 | 24 | 25 |
| Thermoplastic resin (parts by weight) | PBT | 30 | 30 | - | - | - |
| | PETG | - | - | 40 | - | - |
| | PC | - | - | - | 20 | - |
| | HDPE | - | - | - | - | 10 |
| | | | | | | |
| Color tone of sheet (YI) | | 28 | 38 | 34 | - | 42 |
| Stability to residence (%) | | 63.2 | 59.9 | 64.2 | 54.2 | - |

It can be seen from the results given in Table 10 and Table 11 that the polycarbonate resin compositions containing a polycarbonate resin obtained by the polycondensation of isosorbide (ISB) and tricyclodecanedimethanol (TCDDM) with diphenyl carbonate (DPC) and having end groups represented by structural formula (2) described above (double-bond ends) in an amount of 0.001% to 7% based on all ends (Example 43 to Example 46) are materials which suffer little yellowing with respect to sheet color tone and have excellent stability to residence.

Industrial Applicability

According to the invention, polycarbonate resins having excellent heat resistance and transparency and polycarbonate resin compositions containing the resins are obtained.

**Claims**

**1.** A polycarbonate resin obtained by the polycondensation of a dihydroxy compound having a linking structure of the following structural formula (1) with a carbonic diester, **characterized by** containing one or more end groups each represented by the following structural formula (2), the proportion of the number of the end groups each represented by structural formula (2) (A) to the number of all end groups (B), A/B, being in the range of 0.001% to 7% measured as outlined in the experimental part of the description

$$-\left( CH_2 - O \right)- \qquad (1)$$

(No hydrogen atom is bonded to the oxygen atom contained in structural formula (1))

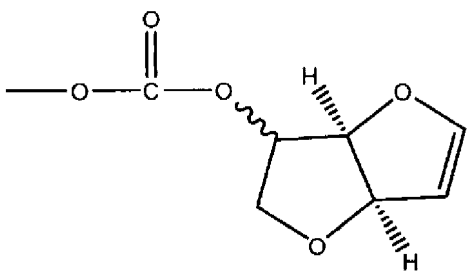

(2)

further **characterized in that** the proportion of the number of end groups each represented by the following structural formula (5) (C) to the number of all end groups (B), C/B, is 25% or higher measured as outlined in the experimental part of the description

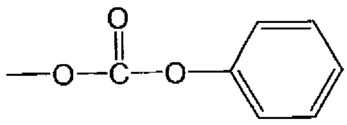

(5)

;

and wherein the polycarbonate resin contains an aromatic monohydroxy compound which may have an alkyl group having 5 or less carbon atoms, in an amount of 700 ppm or less measured as outlined in the experimental part of the description.

2. The polycarbonate resin as claimed in claim 1, **characterized by** containing the dihydroxy compound having a linking structure of the following structural formula (1), in an amount of 60 ppm or less measured as outlined in the experimental part of the description.

$$-\left(CH_2-O\right)- \quad (1)$$

(No hydrogen atom is bonded to the oxygen atom contained in structural formula (1)).

3. The polycarbonate resin as claimed in claim 1 or 2, **characterized by** containing a carbonic diester represented by the following general formula (3), in an amount of 60 ppm or less measured as outlined in the experimental part of the description

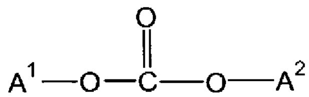

(3)

(In general formula (3), $A^1$ and $A^2$ each are a monovalent aliphatic group which has 1-18 carbon atoms and may have a substituent or a monovalent aromatic group which may have a substituent, and $A^1$ and $A^2$ may be the same or different).

4. The polycarbonate resin as claimed in any one of claims 1 to 3, **characterized in that** the dihydroxy compound having a linking structure of structural formula (1) has a heterocyclic group.

5. The polycarbonate resin as claimed in any one of claims 1 to 4, **characterized in that** the dihydroxy compound having a linking structure of structural formula (1) is a compound which has a heterocyclic group and is represented by the following general formula (4)

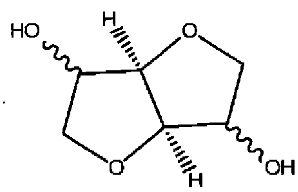

(4)

6. The polycarbonate resin as claimed in any one of claims 1 to 5, **characterized by** being obtained by the polycondensation of a dihydroxy compound having a linking structure of the structural formula (1) with a carbonic diester represented by the following general formula (3)

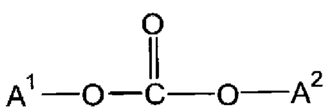

(3)

(In general formula (3), $A^1$ and $A^2$ each are a monovalent aliphatic group which has 1-18 carbon atoms and may have a substituent or a monovalent aromatic group which may have a substituent, and $A^1$ and $A^2$ may be the same or

different).

7. The polycarbonate resin as claimed in any one of claims 1 to 6, **characterized by** having a glass transition temperature of 90°C or higher, wherein the glass transition temperature is determined with a differential scanning calorimeter.

8. The polycarbonate resin as claimed in any one of claims 1 to 7, **characterized by** further containing constituent units derived from at least one compound selected from the group consisting of aliphatic dihydroxy compounds, alicyclic dihydroxy compounds, oxyalkylene glycols, bisphenols, and diols having a cyclic acetal structure.

9. A polycarbonate resin composition **characterized by** comprising the polycarbonate resin according to any one of claims 1 to 8.

10. The polycarbonate resin composition as claimed in claim 9, **characterized by** comprising 100 parts by weight of the polycarbonate resin according to any one of claims 1 to 8 and 0.0001 to 2 parts by weight of a fatty acid.

11. The polycarbonate resin composition as claimed in claim 9, **characterized by** comprising 100 parts by weight of the polycarbonate resin according to any one of claims 1 to 8 and 0.0001 to 2 parts by weight of a natural-substance-based wax.

12. The polycarbonate resin composition as claimed in claim 9 or 10, **characterized by** comprising 100 parts by weight of the polycarbonate resin according to any one of claims 1 to 8 and 0.0001 to 2 parts by weight of at least one compound selected from olefin waxes and silicone oils.

13. The polycarbonate resin composition as claimed in any one of claims 9 to 12, **characterized by** comprising 100 parts by weight of the polycarbonate resin according to any one of claims 1 to 8 and 0.00001 to 0.1 part by weight of an acidic compound.

14. The polycarbonate resin composition as claimed in any one of claims 9 to 13, **characterized by** comprising 100 parts by weight of the polycarbonate resin according to any one of claims 1 to 8 and 0.001 to 1 part by weight of a phosphorus compound.

15. The polycarbonate resin composition as claimed in any one of claims 9 to 14, **characterized by** comprising 100 parts by weight of the polycarbonate resin according to any one of claims 1 to 8 and 0.000001 to 1 part by weight of a bluing agent.

16. The polycarbonate resin composition as claimed in any one of claims 9 to 15, **characterized by** comprising 100 parts by weight of the polycarbonate resin according to any one of claims 1 to 8 and 0.001 to 1 part by weight of an aromatic monohydroxy compound substituted with one or more alkyl groups each having 5 or more carbon atoms.

17. An optical film **characterized by** comprising the polycarbonate resin according to any one of claims 1 to 8.

18. A molded polycarbonate resin article **characterized by** being obtained by molding either the polycarbonate resin according to any one of claims 1 to 8 or the polycarbonate resin composition according to any one of claims 9 to 16.

19. The molded polycarbonate resin article as claimed in claim 18, **characterized by** being a molded article obtained by an injection molding method.

20. The polycarbonate resin composition as claimed in claim 9, **characterized by** comprising 100 parts by weight of the polycarbonate resin according to any one of claims 1 to 8 and 1 to 100 parts by weight of an inorganic filler.

21. The polycarbonate resin composition as claimed in claim 9, **characterized by** comprising 100 parts by weight of the polycarbonate resin according to any one of claims 1 to 8 and 0.01 to 30 parts by weight of a flame retardant.

22. The polycarbonate resin composition as claimed in claim 21, **characterized in that** the flame retardant comprises at least one member selected from the group consisting of flame retardants based on a phosphorus-containing compound and flame retardants based on a halogen-containing compound.

**23.** A polycarbonate resin composition as claimed in claim 9, **characterized by** comprising 100 parts by weight of the polycarbonate resin according to any one of claims 1 to 8 and 0.005 to 5 parts by weight of an ultraviolet absorber.

**24.** The polycarbonate resin composition as claimed in claim 23, **characterized in that** the ultraviolet absorber has a ratio of the molar extinction coefficient thereof at a wavelength of 210 nm to the maximum molar extinction coefficient thereof in the wavelength range of 250 nm to 350 nm of less than 1.75.

**25.** The polycarbonate resin composition as claimed in claim 23 or 24, **characterized in that** the ultraviolet absorber comprises at least one member selected from the group consisting of triazine compounds, oxalanilide compounds, and malonic esters.

**26.** The polycarbonate resin composition as claimed in claim 9, **characterized by** comprising 10 to 90 parts by weight of the polycarbonate resin according to any one of claims 1 to 8 and 90 to 10 parts by weight of a thermoplastic resin.

**27.** The polycarbonate resin composition as claimed in claim 26, **characterized in that** the thermoplastic resin comprises at least one member selected from styrene-based resins, saturated polyester resins, bisphenol-based polycarbonate resins, polyolefin-based resins, and acrylic resins.

**28.** A molded polycarbonate resin article **characterized by** being obtained by molding the polycarbonate resin composition according to any one of claims 20 to 27.

**29.** The molded polycarbonate resin article as claimed in claim 28, **characterized by** being a molded article obtained by an injection molding method.

## Patentansprüche

**1.** Ein Polycarbonatharz, welches durch Polykondensation einer Dihydroxyverbindung, welche eine Verbindungsstruktur der folgenden Strukturformel (1) aufweist, mit einem Kohlensäurediester erhalten ist, **dadurch gekennzeichnet, dass** es eine oder mehrere Endgruppen enthält, welche jeweils durch die folgende Strukturformel (2) dargestellt werden, wobei das Verhältnis der Anzahl der Endgruppen (A), welche jeweils durch die Strukturformel (2) dargestellt werden, zur Anzahl aller Endgruppen (B), A/B, im Bereich von 0,001 % bis 7 % liegt, gemessen wie im experimentellen Teil der Beschreibung angegeben,

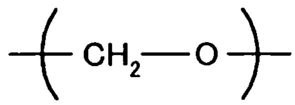

(1)

(an das in der Strukturformel (1) enthaltene Sauerstoffatom ist kein Wasserstoffatom gebunden),

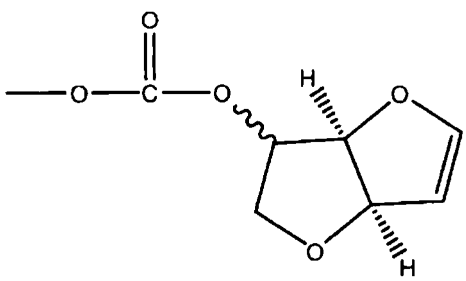

(2)

,

ferner **dadurch gekennzeichnet, dass** der Anteil der Anzahl der Endgruppen (C), welche jeweils durch die folgende Strukturformel (5) dargestellt werden, zur Anzahl aller Endgruppen (B), C/B, 25 % oder mehr beträgt, gemessen wie im experimentellen Teil der Beschreibung angegeben,

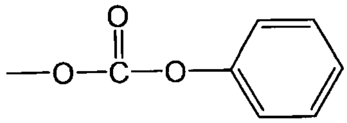

(5)

,

und wobei das Polycarbonatharz eine aromatische Monohydroxyverbindung, welche eine Alkylgruppe mit 5 oder weniger Kohlenstoffatomen aufweisen kann, in einer Menge von 700 ppm oder weniger enthält, gemessen wie im experimentellen Teil der Beschreibung angegeben.

2. Das Polycarbonatharz wie in Anspruch 1 beansprucht, **dadurch gekennzeichnet, dass** dieses die Dihydroxyverbindung, welche eine Verbindungsstruktur der folgenden Strukturformel (1) aufweist, in einer Menge von 60 ppm oder weniger enthält, gemessen wie im experimentellen Teil der Beschreibung angegeben,

$$-\left( CH_2-O \right)- \quad (1)$$

(an das in der Strukturformel (1) enthaltene Sauerstoffatom ist kein Wasserstoffatom gebunden).

3. Das Polycarbonatharz wie in Anspruch 1 oder 2 beansprucht, **dadurch gekennzeichnet, dass** es einen Kohlensäurediester, dargestellt durch die folgende allgemeine Formel (3), in einer Menge von 60 ppm oder weniger enthält, gemessen wie im experimentellen Teil der Beschreibung angegeben,

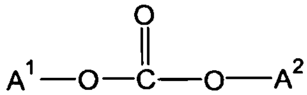

(3)

(in der allgemeinen Formel (3) stellen $A^1$ und $A^2$ jeweils eine einwertige aliphatische Gruppe mit 1 bis 18 Kohlenstoffatomen dar und können einen Substituenten oder eine einwertige aromatische Gruppe, welche einen Substituenten aufweisen kann, aufweisen, und $A^1$ und $A^2$ können gleich oder verschieden sein).

4. Das Polycarbonatharz wie in einem der Ansprüche 1 bis 3 beansprucht, **dadurch gekennzeichnet, dass** die Dihydroxyverbindung, welche eine Verbindungsstruktur der Strukturformel (1) aufweist, eine heterocyclische Gruppe aufweist.

5. Das Polycarbonatharz wie in einem der Ansprüche 1 bis 4 beansprucht, **dadurch gekennzeichnet, dass** die Dihydroxyverbindung, welche eine Verbindungsstruktur der Strukturformel (1) aufweist, eine Verbindung ist, welche eine heterocyclische Gruppe aufweist und durch die folgende allgemeine Formel (4) dargestellt wird

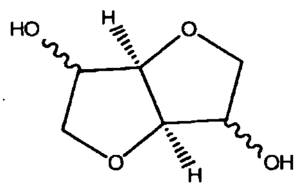

(4)

.

6. Das Polycarbonatharz wie in einem der Ansprüche 1 bis 5 beansprucht, **dadurch gekennzeichnet, dass** dieses durch Polykondensation einer Dihydroxyverbindung, welche eine Verbindungsstruktur der Strukturformel (1) aufweist, mit einem Kohlensäurediester erhalten wird, welcher durch die folgende allgemeine Formel (3) dargestellt wird

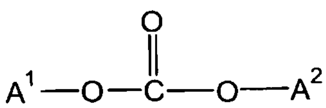

(3)

(in der allgemeinen Formel (3) stellen $A^1$ und $A^2$ jeweils eine einwertige aliphatische Gruppe mit 1 bis 18 Kohlenstoffatomen dar und können einen Substituenten oder eine einwertige aromatische Gruppe, welche einen Substituenten aufweisen kann, aufweisen, und $A^1$ und $A^2$ können gleich oder verschieden sein).

7. Das Polycarbonatharz wie in einem der Ansprüche 1 bis 6 beansprucht, **dadurch gekennzeichnet, dass** dieses eine Glasübergangstemperatur von 90 °C oder höher aufweist, wobei die Glasübergangstemperatur mit einem Differential-Scanning-Kalorimeter bestimmt wird.

8. Das Polycarbonatharz wie in einem der Ansprüche 1 bis 7 beansprucht, **dadurch gekennzeichnet, dass** dieses ferner konstituierende Einheiten enthält, welche von mindestens einer Verbindung, ausgewählt aus der Gruppe bestehend aus aliphatischen Dihydroxyverbindungen, alicyclischen Dihydroxyverbindungen, Oxyalkylenglykolen, Bisphenolen und Diolen mit einer cyclischen Acetalstruktur, abgeleitet sind.

9. Eine Polycarbonatharzzusammensetzung, **dadurch gekennzeichnet, dass** diese das Polycarbonatharz gemäß einem der Ansprüche 1 bis 8 umfasst.

10. Die Polycarbonatharzzusammensetzung wie in Anspruch 9 beansprucht, **dadurch gekennzeichnet, dass** diese 100 Gewichtsteile des Polycarbonatharzes gemäß einem der Ansprüche 1 bis 8 und 0,0001 bis 2 Gewichtsteile einer Fettsäure umfasst.

11. Die Polycarbonatharzzusammensetzung wie in Anspruch 9 beansprucht, **dadurch gekennzeichnet, dass** diese 100 Gewichtsteile des Polycarbonatharzes gemäß einem der Ansprüche 1 bis 8 und 0,0001 bis 2 Gewichtsteile eines Wachses auf Naturstoffbasis umfasst.

12. Die Polycarbonatharzzusammensetzung wie in Anspruch 9 oder 10 beansprucht, **dadurch gekennzeichnet, dass** diese 100 Gewichtsteile des Polycarbonatharzes gemäß einem der Ansprüche 1 bis 8 und 0,0001 bis 2 Gewichtsteile mindestens einer Verbindung, ausgewählt aus Olefinwachsen und Silikonölen, umfasst.

13. Die Polycarbonatharzzusammensetzung wie in einem der Ansprüche 9 bis 12 beansprucht, **dadurch gekennzeichnet, dass** diese 100 Gewichtsteile des Polycarbonatharzes gemäß einem der Ansprüche 1 bis 8 und 0,00001 bis 0,1 Gewichtsteile einer sauren Verbindung umfasst.

14. Die Polycarbonatharzzusammensetzung wie in einem der Ansprüche 9 bis 13 beansprucht, **dadurch gekennzeichnet, dass** diese 100 Gewichtsteile des Polycarbonatharzes gemäß einem der Ansprüche 1 bis 8 und 0,001 bis 1 Gewichtsteil einer Phosphorverbindung umfasst.

15. Die Polycarbonatharzzusammensetzung wie in einem der Ansprüche 9 bis 14 beansprucht, **dadurch gekennzeichnet, dass** diese 100 Gewichtsteile des Polycarbonatharzes gemäß einem der Ansprüche 1 bis 8 und 0,000001 bis 1 Gewichtsteil eines Bläuungsmittels umfasst.

16. Die Polycarbonatharzzusammensetzung wie in einem der Ansprüche 9 bis 15 beansprucht, **dadurch gekennzeichnet, dass** diese 100 Gewichtsteile des Polycarbonatharzes gemäß einem der Ansprüche 1 bis 8 und 0,001 bis 1 Gewichtsteil einer aromatischen Monohydroxyverbindung, welche mit einer oder mehreren Alkylgruppen mit jeweils 5 oder mehr Kohlenstoffatomen substituiert ist, umfasst.

17. Eine optische Folie, **dadurch gekennzeichnet, dass** diese das Polycarbonatharz gemäß einem der Ansprüche 1 bis 8 umfasst.

18. Ein Polycarbonatharzformkörper, **dadurch gekennzeichnet, dass** dieser durch Formen entweder des Polycarbonatharzes gemäß einem der Ansprüche 1 bis 8 oder der Polycarbonatharzzusammensetzung gemäß einem der Ansprüche 9 bis 16 erhalten wird.

19. Der Polycarbonatharzformkörper wie in Anspruch 18 beansprucht, **dadurch gekennzeichnet, dass** es sich um einen durch ein Spritzgussverfahren erhaltenen Formkörper handelt.

20. Die Polycarbonatharzzusammensetzung wie in Anspruch 9 beansprucht, **dadurch gekennzeichnet, dass** diese 100 Gewichtsteile des Polycarbonatharzes gemäß einem der Ansprüche 1 bis 8 und 1 bis 100 Gewichtsteile eines anorganischen Füllstoffs umfasst.

**21.** Die Polycarbonatharzzusammensetzung wie in Anspruch 9 beansprucht, **dadurch gekennzeichnet, dass** diese 100 Gewichtsteile des Polycarbonatharzes gemäß einem der Ansprüche 1 bis 8 und 0,01 bis 30 Gewichtsteile eines Flammschutzmittels umfasst.

**22.** Die Polycarbonatharzzusammensetzung wie in Anspruch 21 beansprucht, **dadurch gekennzeichnet, dass** das Flammschutzmittel mindestens einen Bestandteil, ausgewählt aus der Gruppe bestehend aus Flammschutzmitteln auf Basis einer phosphorhaltigen Verbindung und Flammschutzmitteln auf Basis einer halogenhaltigen Verbindung, umfasst.

**23.** Eine Polycarbonatharzzusammensetzung wie in Anspruch 9 beansprucht, **dadurch gekennzeichnet, dass** diese 100 Gewichtsteile des Polycarbonatharzes gemäß einem der Ansprüche 1 bis 8 und 0,005 bis 5 Gewichtsteile eines UV-Absorbers umfasst.

**24.** Die Polycarbonatharzzusammensetzung wie in Anspruch 23 beansprucht, **dadurch gekennzeichnet, dass** der UV-Absorber ein Verhältnis seines molaren Extinktionskoeffizienten bei einer Wellenlänge von 210 nm zu seinem maximalen molaren Extinktionskoeffizienten im Wellenlängenbereich von 250 nm bis 350 nm von weniger als 1,75 aufweist.

**25.** Die Polycarbonatharzzusammensetzung wie in Anspruch 23 oder 24 beansprucht, **dadurch gekennzeichnet, dass** der UV-Absorber mindestens einen Bestandteil, ausgewählt aus der Gruppe bestehend aus Triazinverbindungen, Oxalanilidverbindungen und Malonsäureestern, umfasst.

**26.** Die Polycarbonatharzzusammensetzung wie in Anspruch 9 beansprucht, **dadurch gekennzeichnet, dass** diese 10 bis 90 Gewichtsteile des Polycarbonatharzes gemäß einem der Ansprüche 1 bis 8 und 90 bis 10 Gewichtsteile eines thermoplastischen Harzes umfasst.

**27.** Die Polycarbonatharzzusammensetzung wie in Anspruch 26 beansprucht, **dadurch gekennzeichnet, dass** das thermoplastische Harz mindestens einen Bestandteil, ausgewählt aus Harzen auf Styrolbasis, gesättigten Polyesterharzen, Polycarbonatharzen auf Bisphenolbasis, Harzen auf Polyolefinbasis und Acrylharzen, umfasst.

**28.** Ein Polycarbonatharzformkörper, **dadurch gekennzeichnet, dass** dieser durch Formen der Polycarbonatharzzusammensetzung gemäß einem der Ansprüche 20 bis 27 erhalten wird.

**29.** Der Polycarbonatharzformkörper wie in Anspruch 28 beansprucht, **dadurch gekennzeichnet, dass** es sich um einen durch ein Spritzgussverfahren erhaltenen Formkörper handelt.

**Revendications**

**1.** Résine de polycarbonate obtenue par polycondensation d'un composé dihydroxy ayant une structure de liaison répondant à la formule structurelle (1) qui suit avec un diester carbonate, **caractérisée en ce qu'**elle contient un ou plusieurs groupes terminaux représentés chacun par la formule structurelle (2) qui suit, la proportion du nombre des groupes terminaux représentés chacun par la formule structurelle (2) (A) au nombre de tous les groupes terminaux (B), A/B, étant située dans la plage allant de 0,001 % à 7 %, mesurée comme indiqué dans la partie expérimentale de la description :

$$-\left( CH_2-O \right)- \qquad (1)$$

(aucun atome d'hydrogène n'est lié à l'atome d'oxygène contenu dans la formule structurelle (1))

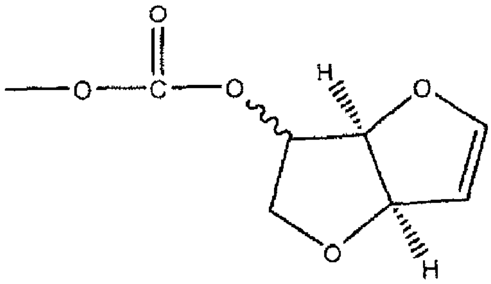

(2)

**caractérisée en outre en ce que** la proportion du nombre de groupes terminaux représentés chacun par la formule structurelle (5) qui suit (C) au nombre de tous les groupes terminaux (B), C/B, est de 25 % ou plus, mesurée comme indiqué dans la partie expérimentale de la description :

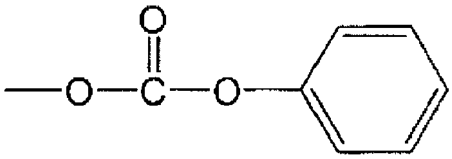

(5)

et laquelle résine de polycarbonate contient un composé monohydroxy aromatique qui peut avoir un groupe alkyle ayant 5 atomes de carbone ou moins, en une quantité de 700 ppm ou moins, mesurée comme indiqué dans la partie expérimentale de la description.

2. Résine de polycarbonate selon la revendication 1, **caractérisée en ce qu'**elle contient le composé dihydroxy ayant une structure de liaison répondant à la formule structurelle (1) qui suit, en une quantité de 60 ppm ou moins, mesurée comme indiqué dans la partie expérimentale de la description :

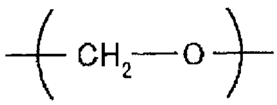

(1)

(aucun atome d'hydrogène n'est lié à l'atome d'oxygène contenu dans la formule structurelle (1)).

3. Résine de polycarbonate selon la revendication 1 ou 2, **caractérisée en ce qu'**elle contient un diester carbonate représenté par la formule générale (3) qui suit, en une quantité de 60 ppm ou moins, mesurée comme indiqué dans la partie expérimentale de la description :

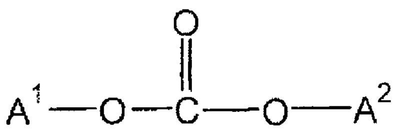

(3)

(dans la formule générale (3), $A^1$ et $A^2$ sont chacun un groupe aliphatique monovalent qui a 1 à 18 atomes de carbone et qui peut avoir un substituant ou un groupe aromatique monovalent qui peut avoir un substituant, et $A^1$ et $A^2$ peuvent être identiques ou différents).

4. Résine de polycarbonate selon l'une quelconque des revendications 1 à 3, **caractérisée en ce que** le composé dihydroxy ayant une structure de liaison de formule structurelle (1) a un groupe hétérocyclique.

5. Résine de polycarbonate selon l'une quelconque des revendications 1 à 4, **caractérisée en ce que** le composé dihydroxy ayant une structure de liaison de formule structurelle (1) est un composé qui a un groupe hétérocyclique et qui est représenté par la formule générale (4) suivante :

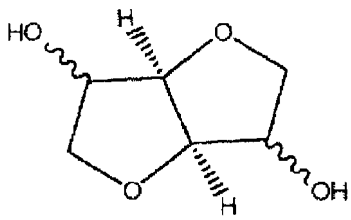

(4)

6. Résine de polycarbonate selon l'une quelconque des revendications 1 à 5, **caractérisée en ce qu'**elle est obtenue par polycondensation d'un composé dihydroxy ayant une structure de liaison répondant à la formule structurelle (1) avec un diester carbonate représenté par la formule générale (3) suivante :

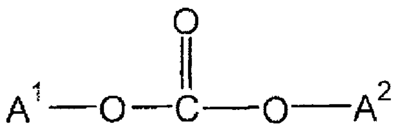

(3)

(dans la formule générale (3), $A^1$ et $A^2$ sont chacun un groupe aliphatique monovalent qui a 1 à 18 atomes de carbone et qui peut avoir un substituant ou un groupe aromatique monovalent qui peut avoir un substituant, et $A^1$ et $A^2$ peuvent être identiques ou différents).

7. Résine de polycarbonate selon l'une quelconque des revendications 1 à 6, **caractérisée en ce qu'**elle a une température de transition vitreuse de 90 °C ou plus, dans laquelle la température de transition vitreuse est déterminée au moyen d'un calorimètre à balayage différentiel.

8. Résine de polycarbonate selon l'une quelconque des revendications 1 à 7, **caractérisée en ce qu'**elle contient en outre des motifs constitutifs dérivés d'au moins un composé choisi dans le groupe constitué par les composés dihydroxy aliphatiques, les composés dihydroxy alicycliques, les oxyalkylèneglycols, les bisphénols, et les diols ayant une structure d'acétal cyclique.

9. Composition de résine de polycarbonate, **caractérisée en ce qu'**elle comprend la résine de polycarbonate de l'une quelconque des revendications 1 à 8.

10. Composition de résine de polycarbonate selon la revendication 9, **caractérisée en ce qu'**elle comprend 100 parties en poids de la résine de polycarbonate de l'une quelconque des revendications 1 à 8 et 0,0001 à 2 parties en poids d'un acide gras.

11. Composition de résine de polycarbonate selon la revendication 9, **caractérisée en ce qu'**elle comprend 100 parties en poids de la résine de polycarbonate de l'une quelconque des revendications 1 à 8 et 0,0001 à 2 parties en poids d'une cire à base de substance naturelle.

12. Composition de résine de polycarbonate selon la revendication 9 ou 10, **caractérisée en ce qu'**elle comprend 100 parties en poids de la résine de polycarbonate de l'une quelconque des revendications 1 à 8 et 0,0001 à 2 parties en poids d'au moins un composé choisi parmi les cires oléfiniques et les huiles siliconées.

13. Composition de résine de polycarbonate selon l'une quelconque des revendications 9 à 12, **caractérisée en ce qu'**elle comprend 100 parties en poids de la résine de polycarbonate de l'une quelconque des revendications 1 à 8 et 0,00001 à 0,1 partie en poids d'un composé acide.

14. Composition de résine de polycarbonate selon l'une quelconque des revendications 9 à 13, **caractérisée en ce qu'**elle comprend 100 parties en poids de la résine de polycarbonate de l'une quelconque des revendications 1 à 8 et 0,001 à 1 partie en poids d'un composé du phosphore.

15. Composition de résine de polycarbonate selon l'une quelconque des revendications 9 à 14, **caractérisée en ce qu'**elle comprend 100 parties en poids de la résine de polycarbonate de l'une quelconque des revendications 1 à 8 et 0,000001 à 1 partie en poids d'un agent d'azurage.

**16.** Composition de résine de polycarbonate selon l'une quelconque des revendications 9 à 15, **caractérisée en ce qu'**elle comprend 100 parties en poids de la résine de polycarbonate de l'une quelconque des revendications 1 à 8 et 0,001 à 1 partie en poids d'un composé monohydroxy aromatique substitué par un ou plusieurs groupes alkyle ayant chacun 5 atomes de carbone ou plus.

**17.** Film optique **caractérisé en ce qu'**il comprend la résine de polycarbonate de l'une quelconque des revendications 1 à 8.

**18.** Article moulé en résine de polycarbonate **caractérisé en ce qu'**il est obtenu par moulage soit de la résine de polycarbonate de l'une quelconque des revendications 1 à 8 soit de la composition de résine de polycarbonate de l'une quelconque des revendications 9 à 16.

**19.** Article moulé en résine de polycarbonate selon la revendication 18, **caractérisé en ce qu'**il est un article moulé obtenu par une méthode de moulage par injection.

**20.** Composition de résine de polycarbonate selon la revendication 9, **caractérisée en ce qu'**elle comprend 100 parties en poids de la résine de polycarbonate de l'une quelconque des revendications 1 à 8 et 1 à 100 parties en poids d'une charge inorganique.

**21.** Composition de résine de polycarbonate selon la revendication 9, **caractérisée en ce qu'**elle comprend 100 parties en poids de la résine de polycarbonate de l'une quelconque des revendications 1 à 8 et 0,01 à 30 parties en poids d'un agent ignifugeant.

**22.** Composition de résine de polycarbonate selon la revendication 21, **caractérisée en ce que** l'agent ignifugeant comprend au moins un membre choisi dans le groupe constitué par les agents ignifugeants à base d'un composé contenant du phosphore et les agents ignifugeants à base d'un composé halogéné.

**23.** Composition de résine de polycarbonate selon la revendication 9, **caractérisée en ce qu'**elle comprend 100 parties en poids de la résine de polycarbonate de l'une quelconque des revendications 1 à 8 et 0,005 à 5 parties en poids d'un agent absorbant les ultraviolets.

**24.** Composition de résine de polycarbonate selon la revendication 23, **caractérisée en ce que** l'agent absorbant les ultraviolets a un rapport de son coefficient d'extinction molaire à une longueur d'onde de 210 nm à son coefficient d'extinction molaire maximal dans la gamme de longueurs d'onde allant de 250 nm à 350 nm qui est inférieur à 1,75.

**25.** Composition de résine de polycarbonate selon la revendication 23 ou 24, **caractérisée en ce que** l'agent absorbant les ultraviolets comprend au moins un membre choisi dans le groupe constitué par les composés triazines, les composés oxalanilides, et les esters malonates.

**26.** Composition de résine de polycarbonate selon la revendication 9, **caractérisée en ce qu'**elle comprend 10 à 90 parties en poids de la résine de polycarbonate de l'une quelconque des revendications 1 à 8 et 90 à 10 parties en poids d'une résine thermoplastique.

**27.** Composition de résine de polycarbonate selon la revendication 26, **caractérisée en ce que** la résine thermoplastique comprend au moins un membre choisi parmi les résines à base de styrène, les résines de polyester saturé, les résines de polycarbonate à base de bisphénol, les résines à base de polyoléfine, et les résines acryliques.

**28.** Article moulé en résine de polycarbonate **caractérisé en ce qu'**il est obtenu par moulage de la composition de résine de polycarbonate de l'une quelconque des revendications 20 à 27.

**29.** Article moulé en résine de polycarbonate selon la revendication 28, **caractérisé en ce qu'**il est un article moulé obtenu par une méthode de moulage par injection.

[FIG. 1]

(A)

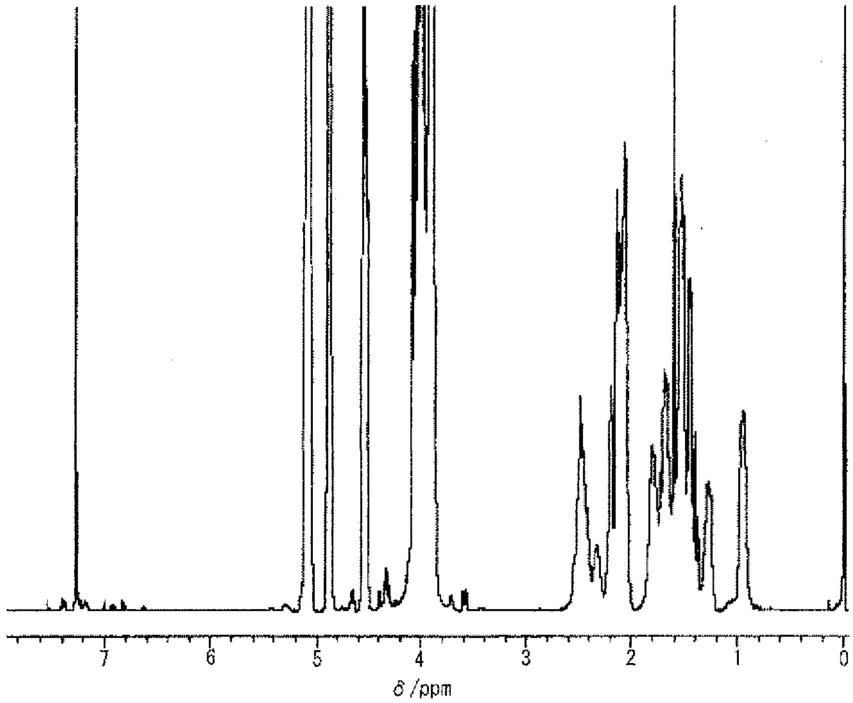


(B)

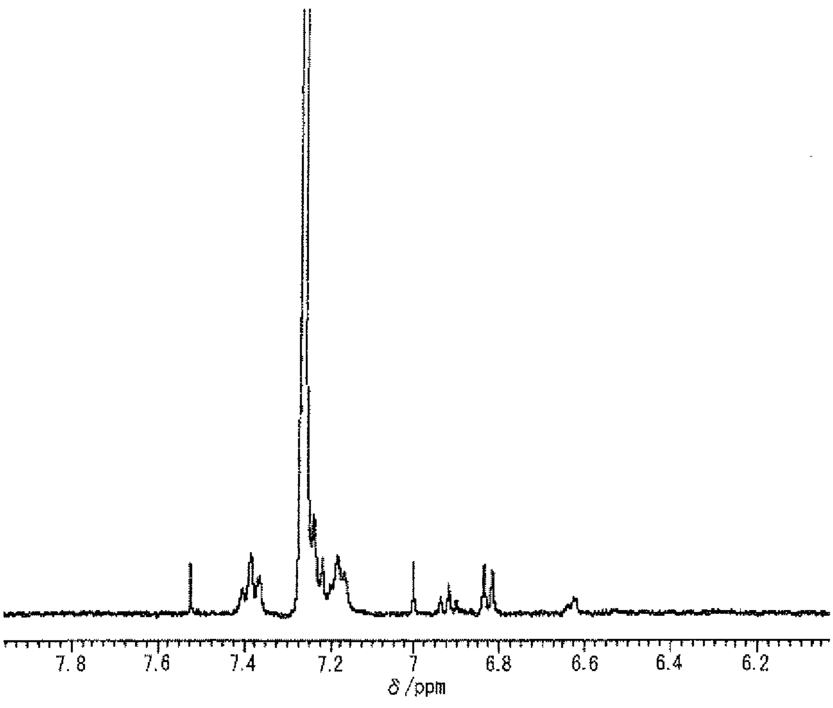

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1079686 A
- JP 56055425 A
- WO 2004111106 A
- EP 1640400 A1
- WO 2007148604 A1


### Non-patent literature cited in the description


- *Nomenclature of Inorganic Chemistry IUPAC Recommendations*, 2005
- *Journal of The Society of Rheology, Japan*, 1991, vol. 19, 93-97